# EUROPEAN PATENT APPLICATION

(11) **EP 4 339 367 A1**
(43) Date of publication of application: **20.03.2024**
(21) Application number: 22195442.3
(22) Date of filing: 13.09.2022
(51) Int. Cl.: E01C 13/08, D01D 5/253, D01D 5/34, D01F 1/10, C08G 77/442

(54) **ARTIFICIAL TURF FIBER COMPRISING A POLYOLEFIN GRAFTED WITH SILOXANES**

(71) Applicant: Polytex Sportbeläge Produktions-GmbH, 47929 Grefrath (DE)
(72) Inventor: SICK, Stephan, 76532 Baden-Baden (DE); VAN DEN BERG, Thorsten, 45145 Essen (DE); REHOSEK, Marco, 45144 Essen (DE); SANDER, Dirk, 47647 Kerken (DE); WAGENER, Oliver, 47929 Grefrath (DE)
(74) Representative: Richardt Patentanwälte PartG mbB

(57) **Abstract**

The invention provides for an artificial Turf fiber comprising a polyolefin grafted with one or more siloxanes.

## Description

### Field of the invention

The invention relates to artificial turf fibers and the production of artificial turf fibers. The invention further relates to artificial turf comprising artificial turf fibers.

### Background and related art

Artificial turf or artificial grass is surface that is made up of fibers which is used to replace grass. The structure of the artificial turf is designed such that the artificial turf has an appearance which resembles grass. Typically artificial turf is used as a surface for sports such as soccer, American football, rugby, tennis, golf, for playing fields, or exercise fields. Furthermore artificial turf is frequently used for landscaping applications.

An advantage of using artificial turf is that it eliminates the need to care for a grass playing or landscaping surface, like regular mowing, scarifying, fertilizing and watering. Watering can be e.g. difficult due to regional restrictions for water usage. In other climatic zones the re-growing of grass and re-formation of a closed grass cover is slow compared to the damaging of the natural grass surface by playing and/or exercising on the field.

The production of artificial turf fibers often turns out to be a technical challenge, as various problems can occur, such as fibers tearing off or extrusion nozzles sticking. Often, additives which are used to address these problems lead to undesirable mechanical and/or chemical properties of the resulting artificial turf fibers.

EP4012082A2 discloses the usage of siloxanes to reduce rotational resistance of artificial turf sport surfaces and to obviate the need to water the artificial surface to provide a sufficiently slippery surface. In order to achieve this, free siloxanes are used which are chosen such that they are capable of migrating to the fiber surface during manufacture of the material. EP4012082A2 teaches to use siloxanes which make the fiber surface so slippery that the playing characteristics of the field are similar to watered fields, e.g. irrigated hockey fields..

EP 3 137 682B1 describes the use of nucleating agent for increasing the surface roughness of artificial turf fibers for more firmly integrating the fibers into the backing.

### Summary

The invention provides for an artificial turf fiber and for a method of manufacturing an artificial turf fiber as specified in the independent claims. Embodiments are given in the dependent claims. Embodiments and examples disclosed herein can freely be combined with each other if they are not mutually exclusive.

In one aspect the invention relates to an artificial turf fiber comprising a polyolefin grafted with one or more siloxanes.

This may be advantageous, as the polyolefins grafted with siloxanes allow for a good compromise with regard to the smoothness and slipperiness of artificial turf fibers: the polyolefin grafted with the siloxanes allows manufacturing artificial turf fibers which are smooth enough as to prevent skin burns when a player slips and slides along the turf. At the same time, they are not too slippery (which is undesired as this would cause the players to slip) because the grafting process generates large molecules with polyolefin-like properties which are immobile.

Furthermore, the polyolefins grafted with siloxanes allow for a good compromise with regard to technical problems occurring during the extrusion step for providing the artificial turf fiber on the one hand and a desired degree of slipperiness of artificial turf fibers at the other hand: applicant has observed that already very small amounts of the polyolefins grafted with siloxanes allow for effectively preventing the clogging of the extrusion nozzle. This is beneficial as high amounts would make the surface of the fibers so slippery that they could be pulled out of the backing easily, thereby making the artificial turf susceptible to wear and tear. In the prior art, as e.g. represented by EP 3 137 682B1, additional additives like nucleating agents had to be added to increase the surface roughness of the fibers to ensure that the fibers are firmly integrated into the backing and it was observed that some conventional process aids counteract the effect of the nucleating agent by drastically increasing the slipperiness of the fiber surface. Applicant has surprisingly observed that already very small amounts of polyolefins grafted with siloxanes allow to prevent nozzle clogging, and these small amounts do not decrease surface roughness to an intolerable value. Hence, embodiments of the invention allow manufacturing artificial turf fibers which can be integrated firmly into the backing of artificial turf, whereby nevertheless the extrusion process can be performed without failures caused by a clogging of the extrusion nozzle.

A further advantage may be that the polyolefin grafted with siloxanes can be used as a process aid for improving an extrusion process for obtaining the artificial turf fiber. The polyolefin grafted with siloxanes increases the lubricity and reduces the surface adhesiveness of the extruded polymer mass. In the extrusion of polymer fibers, the problem often occurs that the viscosity and the surface adhesiveness of the polymer mass is too high, so that the nozzles become completely or partially clogged. Deposit on the extrusion screws and the extrusion coat result in a pressure increase and an insufficient flow of the polymer melt as well as a shortening of tool life. Moreover, in extrusion orifices with complex profile, if the viscosity of the polymer mass is too high, damage to the extruded fiber can occur due to high flow velocity differences at different regions of the extrusion orifice, because the extruded polymer mass adheres to the metal surfaces of the extrusion nozzles, thereby reducing the extrusion speed at the periphery of the fiber/extrusion orifice relative to the speed at the center of the fiber/extrusion orifice. These different flow velocities can be so strong that the polymer flow is interrupted and the extruded fiber breaks off during the extrusion process. This can lead to failure in the production process and significant delays in the production process. Furthermore, the oxidative ageing of build-ups during the extrusion process on all heated metal surfaces in the extrusion line can lead to hardly removable deposits and inhibit the flow up to permanent damaging of the line.

Adjusting the viscosity and surface adhesion of the polymer mass during extrusion is a challenge, especially in the field of artificial turf fibers, as the lubricity and surface adhesivity of the polymer mass must also not be too high. Otherwise, the fibers may become too slippery, causing players to slip, or the fibers may not withstand the mechanical stresses during play due to a lack of internal cohesion. The use of the polyolefin grafted with siloxanes as a process aid for artificial turf production can be particularly advantageous, as this may allow preventing a complete or partial clogging of an extrusion nozzle also in technically highly demanding and complex extrusion settings such as extrusion of polymer mixtures with multiple immiscible polymers, coextrusion of polymers to achieve a desired polymer distribution profile, and/or the extrusion through highly filigree extrusion nozzle profiles.

The use of the polyolefin grafted with siloxanes as a process aid may have the advantage that they are non-toxic. There exist reports that some halogenated compounds, e.g. some per- and polyfluoroalkyl substances (PFAS), which have been used as process aid for the polymer industry, are potentially toxic. Embodiments of the invention may hence have the advantage that the artificial turf fiber is free of toxic process aids. Embodiments of the invention make it possible to create artificial turf fibers that do not contain halogen compounds and are physiologically harmless. This is particularly advantageous in the field of artificial turf fibers, since these regularly come into skin contact with players. In some cases, artificial turf surfaces are also installed in private gardens and children's playgrounds, so the health safety of the fibers is particularly important here.

A further advantage may be that the polyolefin grafted with siloxanes are highly effective and thermally stable and hence are better suited for extrusion processes than, for example, fatty acids which would at least partially degrade due to the high temperatures during extrusion.

A further advantage may be that the polyolefin grafted with siloxanes is a substance in which the siloxane molecules are not used directly as such as a processing aid, but rather have been grafted onto a polyolefin. This can have the advantage, on the one hand, that the migration capability of this additive within the polymer composition is reduced (both because of the high molecule size and the polymer-like properties of the additive provided by the polyolefin). This is advantageous in that segregation of this additive from the polymer mass is prevented. More importantly, the size and polyolefin backbone ensures that the additive acquires polyolefin-like properties, making the additive easier to disperse within the polymer mass and also easier to maintain in a homogeneous dispersed state. This has a positive effect on both the extrusion process and the subsequent use of the extruded fiber as an artificial turf fiber: due to the reduced migration, the polyolefin grafted with siloxanes cannot leave the fibers in the course of use. At most, there is a very slow migration of this processing aid to the surface of the fiber along a small concentration gradient, which may be created by some polyolefin grafted with siloxanes leaving the fiber and/or being worn away by mechanical wear. The polyolefin-like properties also prevent the additive from clogging openings at certain points in the extrusion nozzle, and hence prevent a modification of the extruded fiber profile, and of fiber breakage during extrusion.

The polyolefin grafted with one or more siloxanes mixes well into the base polymer and integrates into the solidified fiber polymer mass. Due to the improved compatibility it does not show a separation from the base polymer mass. Compared to highly fluent lubricating agents like spin finishes it is immobile and does not migrate. Thus, it does not negatively impact the tuftbind like classic additives as e.g. fatty acid polyglycol esters.

According to embodiments, the artificial turf fiber is free from halogen compounds (especially bromine compounds, fluorine compounds, and chlorine compounds).

According to embodiments, the artificial turf fiber is free from free siloxanes (free siloxanes: siloxanes not bound to a polyolefin). In particular, according to embodiments, the artificial turf fiber is basically free of siloxanes having a molecular mass below 500 Dalton.

This may be beneficial, because some free siloxanes and dispersions of free silicones are suspected of damaging the fertility of the unborn child.

According to some embodiments, at least 50% of the molecules of the polyolefin grafted with one or more siloxanes have a molecular weight of at least 2.000 Dalton. According to some embodiments, at least 50% of the polyolefin grafted with one or more siloxanes have a molecular weight of at least 10.000 Dalton, or at least 500.000 Dalton.

According to embodiments, the polyolefin grafted with one or more siloxanes have a bulk density 500 - 600 kg/m³.

For example, this can mean that the concentration of the said compounds in the artificial turf fiber are below their respective detection limits.

Siloxanes are commonly known as silicones. Their chemical structure determines a range of physicochemical properties, including toxicity/safety with respect to human health. In general, the safety of application decreases with the decrease in silicone particle size. This is because low molecular siloxanes demonstrate a lipophilic character which increases their ability to overcome biological membranes and skin barriers. According to the claimed invention, the siloxanes are grafted on a polyolefin. Thereby, the molecular weight of the siloxanes is increased and the bioavailability and ability to migrate to the surface of the artificial turf fiber is decreased.

According to embodiments, the polyolefin is polyethylene or polypropylene or polyamide.

According to embodiments, the artificial turf fiber comprises or basically consists of a base polymer, whereby the main part, e.g. at least 50%, in particular at least 60%, in particular at least 70% by weight of the base polymer, consists of polyethylene or polypropylene or polyamide. Preferably, the type of olefin in the polyolefin grafted with the one or more siloxanes is identical to the polymer type that makes up the main part of the base polymer.

This can be advantageous because artificial turf fibers are often made of polyethylene or polypropylene or polyamide or a polymer blend with two or more of these polymer types. By grafting the siloxanes onto a polyethylene molecule, the entire molecule acquires a chemical similarity to the properties of polyethylene. This means that the polyethylene grafted with the siloxanes can be particularly well and homogeneously mixed with a polymer mass mainly consisting of polyethylene. Likewise, polypropylene grafted with one or more siloxanes can be homogeneously and stably mixed with a polymer mass mainly consisting of polypropylene. This may be advantageous because an inhomogeneous distribution of the additive and/or a subsequent phase separation of additive and polymer mass can lead to the extraction nozzles becoming completely or partially clogged, fine structures of the fiber profile disappearing or being distorted, or the fiber breaking off during the extraction process. Moreover, applicant has observed that highly similar chemical properties of the olefin used for synthesizing the olefin grafted with the siloxanes and the polymer being the main part of the base polymer may help ensuring that the polyolefin grafted with the siloxanes do not migrate to the surface of the fibers during the extrusion process. This may ensure that the fiber surface does not become too slippery and is still rough enough to allow for a firm integration in an artificial turf backing.

According to embodiments, at least 0.01 % by weight of the artificial turf fiber, and in particular 0.01 % to 0.25 % by weight of the artificial turf fiber, in particular 0.01 % to 0.09 % by weight of the artificial turf fiber, in particular 0.01 % to 0.08 % by weight of the artificial turf fiber, in particular 0.01 % to 0.07 % by weight of the artificial turf fiber, in particular 0.01 % to 0.06 % by weight of the artificial turf fiber, in particular 0.01 % to 0.05 % by weight of the artificial turf fiber, and in particular 0.02-0.03 % by weight of the artificial turf fiber, consists of the polyolefin grafted with the one or more siloxanes.

Applicant has observed that the above-mentioned amount ranges provide for an artificial turf fiber which has highly desirable properties both in respect to the extrusion process (no clogging, no distortion of the fiber profile, no tearing apart of the fibers) and in respect to the playing characteristics: the fibers are robust to wear and tear and do not delaminate. Nevertheless, they have a smooth but not too slippery surface. The above mentioned amount ranges provide a very good compromise with regard to the smoothness and slipperiness: if the polyolefin grafted with the siloxanes is added in the above-mentioned amount ranges, the fibers are smooth enough as to prevent skin burns when a player slips and slides along the turf. At the same time, they are not too slippery, as this would cause the players to slip.

Applicant has surprisingly observed that an amount of the polyolefin grafted with the one or more siloxanes of not more than 0.25 % by weight of the artificial turf fiber, or of not more than 0.09 %, and even of not more than 0.07 %, in some cases not more than 0.05% by weight of the fiber is sufficient for ensuring a smooth extrusion process of the monofilament or the polymer film, and even for a monofilament extrusion process with a filigree fiber profile. A further benefit is that the resulting artificial turf fiber has very good playing characteristics which have been observed to deteriorate if the amount of the additive is increased to significantly more than 0.25 wt%: the resulting fibers. This is because limiting the amount of the olefine grafted with the one or more siloxanes to the 0.25% threshold may ensure that the fiber surface is smooth enough to prevent skin burns but is still rough enough to prevent the players slip and fall. Furthermore, this amount threshold ensures that the surface roughness of the artificial turf fiber is still high enough to allow a firm integration of the fiber into a carrier via a secondary backing. In some embodiments, the artificial fiber is integrated in a carrier (e.g. by tufting, weaving, etc.), and then a liquid secondary backing, e.g. a liquid polyurethane mass or a liquid latex mass is applied on at least one side of the carrier, thereby contacting and wetting at least some portions of the integrated fibers. When the liquid secondary backing solidifies, the artificial turf fibers are firmly integrated in the backing. If the amount of the polyolefin grafted with the one or more siloxanes would be too high, the surface roughness of the resulting fibers would be too low and the fibers could be pulled out of the backing as a consequence of wear and tear.

According to embodiments, the polyolefin grafted with the one or more siloxanes is a graft copolymer in which a plurality of siloxane side-chain-blocks are grafted onto a backbone consisting of the polyolefin.

According to embodiments, the siloxanes are organo-modified siloxanes (OMS).

According to embodiments, the polyolefin grafted with one or more siloxanes has a molecular weight of more than 500 Dalton.

According to embodiments, the polyolefin grafted with one or more siloxanes is solid at room temperature or has a consistency of vax at room temperature. The term room temperature as used herein refers to a temperature of 20°C. The viscosity may depend on the ratio of siloxanes to polyolefin.

According to embodiments, the acid number (calculated for non-volatile content) of the siloxanes having been grafted onto the polyolefin is about 0.5 mg KOH/g (+/- 10%).

According to embodiments, the OH-content (calculated for non-volatile content) of the siloxanes having been grafted onto the polyolefin is about 48 mg KOH/g (+/- 10%).

Using a polyolefin grafted with one or more siloxanes which are solid or waxy at room temperature may have the advantage that the consistency is similar to the consistency of the typical artificial turf fiber material at room temperature. Moreover, the basically solid or waxy state will prevent the grafted polyolefin from migrating to the surface of the fiber and leaving the fiber.

According to embodiments, the artificial turf fiber comprises two or more protrusions which extend from the center of the fiber in different directions.

This may have the advantage of reproducing the look and feel of natural grass blades more faithfully. Applicant has observed that the extrusion of polymer fibers through extrusion nozzles with complex, filigree profiles increases the risk of clogging and fiber breakage. Applicant has surprisingly observed that these problems can be prevented or at least significantly reduced by adding a polyolefin grafted with one or more siloxanes to the base polymer, because this will significantly reduce the adhesion of the polymer to the walls of the extrusion nozzles and result in a reduction of polymer mass velocity differences and shear forces at the extrusion nozzle. Hence, an artificial turf fiber made from a polymer comprising this additive will allow for a very complex, filigree fiber profile which accurately mimics the look and feel of natural grass.

According to embodiments, the profile of at least one of the protrusions comprises a concave side and/or an undulated section spanning at least 60% of one side of said at least one protrusion.

The undulated sections will allow to mimic grooves and plant veins that can be observed on the underside and sometimes also the upper side of some grasses, so that it is possible to specifically reproduce the surface structure of certain grass species. The use of concave edges can serve the same purpose and/or help to save material without reducing the stability of the fibers. This reduces material and transport costs and can also improve the game properties.

According to embodiments, the artificial turf fiber comprises a base polymer and wherein the polyolefin grafted with the one or more siloxanes is dispersed in the base polymer.

According to embodiments, the main part of the base polymer is selected from a group consisting of polyethylene (PE), polypropylene (PP), polyamide (PA), polyethylene terephthalate (PET), and polybutylene terephthalate (PBT). For example, the main part may mean at least 50%, or at least 60%, or at least 70%, or at least 80%, or at least 90%, or at least 95% by weight of the polymer. In some embodiments, the base polymer is a combination of two or more of the above-mentioned polymers. For example, the base polymer can be a blend of multiple different polymers. A compatibilizer may be used for combining immiscible polymer types.

According to embodiments, the artificial turf fiber is an extruded fiber.

According to embodiments, the artificial turf fiber is an extruded fiber created by extruding a base polymer comprising a mixture of two or more immiscible polymers.

According to embodiments, the artificial turf fiber is an extruded fiber created by coextruding two or more polymers through the same extrusion nozzle as to form a desired polymer distribution profile in the fiber. For example, the desired polymer distribution profile can be a core-cladding pattern.

According to embodiments, the base polymer comprises a first polymer, a second polymer, and a compatibilizer. The first polymer and the second polymer are immiscible, and the first polymer forms threadlike regions surrounded by the compatibilizer within the second polymer.

According to embodiments, the first polymer is any one of the following: polyamide, polyethylene terephthalate (PET), and polybutylene terephthalate (PBT). In addition, or alternatively, the second polymer is any one of the following: polyethylene, polypropylene, and a mixture thereof.

According to embodiments, the first polymer is a polar polymer, e.g. PA, and the second polymer is a non-polar polymer, e.g. PE.

According to embodiments, the compatibilizer is any one of the following: a maleic acid grafted on polyethylene or polyamide; a maleic anhydride grafted on free radical initiated graft copolymer of polyethylene, SEBS, EVA, EPD, or polypropylene with an unsaturated acid or its anhydride such as maleic acid, glycidyl methacrylate, ricinoloxazoline maleinate; a graft copolymer of SEBS with glycidyl methacrylate, a graft copolymer of EVA with mercaptoacetic acid and maleic anhydride; a graft copolymer of EPDM with maleic anhydride; a graft copolymer of polypropylene with maleic anhydride; a polyolefin-graft-polyamide, polyethylene or polyamide; and a polyacrylic acid type compatibilizer.

Using a compatibilizer may have the advantage that the immiscible polymers may not delaminate from each other. The first polymer forms beads within the second polymer, whereby the beads are transformed in the extrusion process into thread-like regions embedded within the second polymer. The thread-like regions may be further elongated in an optional stretching step applied on the extruded monofilament. The compatibilizer ensures that the first polymer within the thread-like regions and the second polymer do not delaminate.

The use of the first polymer and the second polymer enables the properties of the artificial turf fiber to be tailored. For instance a softer plastic may be used for the second polymer to give the artificial turf a more natural grass-like and softer feel. A more rigid plastic may be used for the first polymer or other immiscible polymers to give the artificial turf more resilience and stability and the ability to spring back after being stepped or pressed down.

A further advantage may possibly be that the thread-like regions are concentrated in a central region of the monofilament during the extrusion process. This leads to a concentration of the more rigid material in the center of the monofilament and a larger amount of softer plastic on the exterior or outer region of the monofilament. This may further lead to an artificial turf fiber with more grass-like properties.

A further advantage may be that the artificial turf fibers have improved long term elasticity. This may require reduced maintenance of the artificial turf and require less brushing of the fibers because they more naturally regain their shape and stand up after use or being trampled.

However, use of two or more different, immiscible polymers may have the disadvantage of an increased risk of delamination of the artificial turf fiber during use, and an increased risk of phase separation during the extrusion process which could also cause a clogging of an extrusion nozzle or fiber breakage. These problems may be caused by the tendency of the immiscible polymers to separate into different phases, whereby the phase having a higher adhesiveness to the metal walls of the extruder may accumulate at the extrusion nozzle and cause the above-mentioned problems. It was surprisingly observed that the addition of a polyolefin grafted with one or more siloxanes may prevent these problems, thereby improving the production of artificial turf fibers comprising two or more immiscible polymers such as PE and PA.

According to embodiments, the fiber comprises 60-99 % by weight of the fiber an LLDPE polymer and 1-15% by weight of the fiber an LDPE polymer. For example, the fiber may be generated by extruding a base polymer comprising 60-99 % by weight the LLDPE polymer and 1-15% by weight the LDPE polymer.

According to embodiments, the LLDPE polymer has a density in a range of 0.918 g/cm³ to 0.920 g/cm³ and the LDPE polymer has a density in a range of 0.919 g/cm³ to 0.921 g/cm³.

Manufacturing an artificial turf comprising a mixture of LLDPE and LDPE in the above specified amount ranges which also comprises a polyolefin grafted with one or more siloxanes for creating a monofilament in an extrusion and stretching process may be advantageous for multiple reasons:
The method allows manufacturing artificial turf fibers which are at the same time soft, flexible, resistant to shear forces (e.g. applied during extrusion or during stretching), have a high tensile strength and are resistant to splicing, whereby the extrusion nozzle is protected from partial or complete clogging caused by crystalline portions which adhere to the inner walls of the extrusion nozzle. "Splicing" as used herein relates to the splitting a fiber along its longitudinal axis.

Compared to a combination of a plastomer and an LLDPE or HDPE, a base polymer which is a polymer mix comprising a combination of LLDPE and LDPE in the specified amount ranges shows an increased softness, flexibility and improved tensile strength while showing the same or an even improved resistance against splitting. It has been observed that not all plastomers are well suited for preventing splitting in artificial turf fibers, presumably because plastomers - at least if provided in some particular amount ranges and/or having a particular density - appear not to generate a chain entanglement that can reliably prevent splicing and/or have negative side effects like making a fiber that has decreased tensile strength or flexibility and/or an increased brittleness.

Applicant has observed that an optimal compromise between a high splicing resistance on the one hand and high tensile strength on the other hand can be achieved by combining specific amounts of LLDPE and LDPE polymers for generating an artificial turf fiber. Said fiber may in addition have a decreased brittleness and increased flexibility. Applicant has also observed that the amount of LDPE used should be comparatively low, preferentially in the range of 1%-15%, more preferentially in the range of 5-8 % by weight of the polymer mixture to ensure a high resistance to splicing in combination with a high tensile strength and high flexibility of the generated fiber.

Applicant has observed that the lack of long-chain branching in LLDPE allows the chains to slide by one another upon elongation without becoming entangled. As a result, fibers completely consisting of LLDPE are susceptible to splicing if a pulling force is applied on the surface of a fiber. Applicant has also observed that LLDPE has a higher tensile strength and a higher puncture resistance than LDPE and many plastomers. Using a specific combination of LDPE and LLDPE in the above specified amount ranges allows manufacturing artificial turf fibers which can resist splicing and at the same time are soft, flexible and have a high tensile strength.

The stretching-induced formation of polymer crystals within and at the surface of the monofilament increases the roughness of the fiber, thereby allowing a strong mechanical fixing in an artificial turf backing in embodiments wherein the monofilaments are partially embedded in a liquid film that later solidifies, e.g. a latex or PU film. However, the crystals formed during the extrusion process also have downsides because they may increase the risk of clogging the nozzle or of a fiber break during the extrusion process. These risks can, however, be significantly reduced by adding a polyolefin grafted with one or more siloxanes to the base polymer.

Applicant has further observed that, upon applying strong shear forces on a polymer mixture comprising LLDPE and LDPE polymers, e.g. by extruding a polymer mixture comprising LLDPE and LDPE polymers, LDPE molecules are deformed, the side branches of the LDPE molecules get entangled with the ones of other LDPE molecules and/or with LLDPE molecules. As a consequence of chain entanglement, the viscosity and the risk of occlusions of the nozzle or of a deformed fiber outline raises. Applicant found that an artificial turf fiber manufactured from a particular mixture of specific amounts of LDPE and LLDPE which also comprises the polyolefin grafted with one or more siloxanes is soft and flexible and has high tensile strength (thanks to the LLDPE component) and is at the same time resistant against splicing (thanks to chain entanglement caused by the LDPE component) and the above-mentioned manufacturing problems. Applicant has observed that if the ratio of LLDPE to LDPE is too large, splicing may occur, and if said ratio is too low, the flexibility and tensile strength of the fiber may significantly decrease.

Contrary to polymers such as polyamide (PA), polyethylene (PE) is in general considered as a comparatively soft and flexible polymer that reduces the risk of injuries such as skin burns. LLDPE is a form of PE that is shear sensitive because of its shorter chain branching. LLDPE allows for a faster stress relaxation of the polymer chains after extrusion or stretching compared with stress relaxation of an LDPE of equivalent melt index. Stress resistance may be particularly beneficial in the context of artificial turf fiber production: the stretching process triggers the formation of crystalline portions on the surface (and inner portions) of the stretched fiber. The crystals increase the surface roughness and thus allow for a better mechanical fixing of the fiber in a surface backing.

According to embodiments, the base polymer is a polymer mixture comprising the LDPE polymer in an amount of 5-8 % by weight of the polymer mixture and comprises the LLDPE polymer in an amount of 60%-95% by weight of the polymer mixture. According to preferred embodiments, the polymer mixture comprises the LDPE polymer in an amount of 5-8 % by weight of the polymer mixture and/or comprises the LLDPE polymer in an amount of 65-75 % by weight of the LLDPE polymer mixture.

The "polymer mixture" may comprise additional substances, e.g. filler materials and/or additives, so the total amount of the LLDPE polymer and the LDPE polymer do not have to sum up to 100% of the weight of the polymer mixture.

According to embodiments, the LDPE polymer has a density in a range of 0.919 g/cm³ to 0.921 g/cm³.

According to some embodiments, the LLDPE has a density in a range of 0.918 g/cm³ to 0.920 g/cm³.

Applicant has surprisingly observed that the ability of a fiber to resist splicing and to show high tensile strength also depends on the density of the respective polymers, presumably because the density corresponds to the number and position of branches and other structural features related to the branching of a PE molecule. The above density ranges have been observed to be particularly suited to provide for a fiber combining splicing resistance and tensile strength.

According to other embodiments, the LLDPE polymer comprises a first LLDPE polymer having a density in a range of 0.918 g/cm³ to 0.920 g/cm³ and comprises a second LLDPE polymer having a density in a range of 0.914 g/cm³ to 0.918 g/cm³.

According to embodiments, the polymer mixture comprises the second LLDPE polymer in an amount of 7 - 13 % by weight of the polymer mixture. The rest of the LLDPE polymer in the mixture may consist of the first LLDPE having the above specified, higher density.

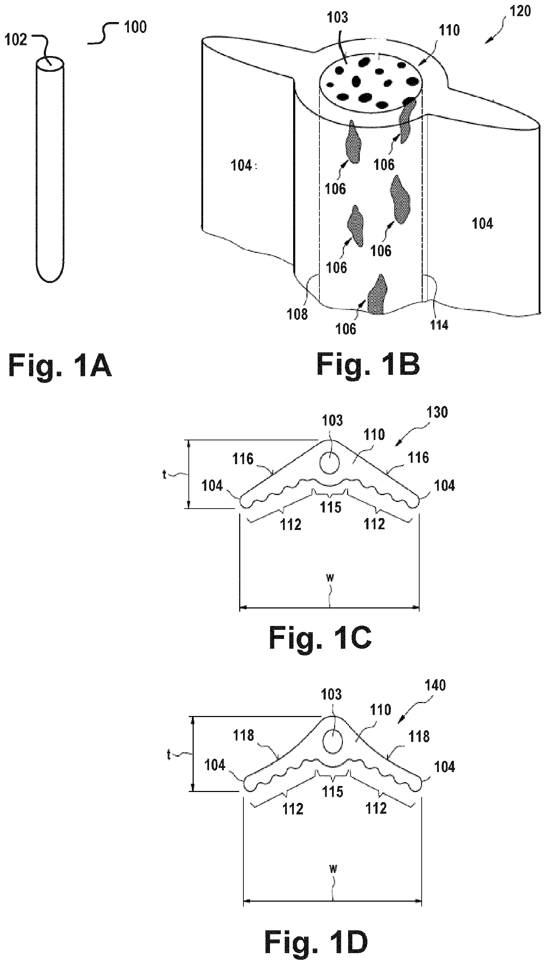

Adding a second, "low density" LLDPE in addition to the first, "medium density" LDPE may be advantageous as the risk of splicing is further reduced: the low density LLDPE is folded in three-dimensional space in a less dense manner (see Fig. 1) and may thus reduce the amount of crystalline portions that are created in the stretching process. This reduces the brittleness of the fiber and thus may also reduce the risk of splicing. Thus, by choosing a particular amount of LDPE and LLDPE, splicing may be prevented by promoting chain entanglement, whereby the risk of splicing may be further reduced by adding low-density LLDPE.

In a further beneficial aspect, adding an amount of said "low density" LDPE makes the fiber smoother and reduces risk of skin burns.

According to embodiments, the LLDPE polymer is added to the polymer mixture in the form of
- a "main" LLDPE polymer component lacking additives. The "main" or "pure" LLDPE polymer can be added, for example, in an amount of 47-88 % by weight of the polymer mixture, preferentially, in an amount of 70-75% by weight of the polymer mixture; and
- a further LLDPE polymer comprising one or more additives, the second LLDPE polymer being added, for example, in an amount of 7-13 % by weight of the polymer mixture, preferentially in an amount of approximately 10%.Said additive-containing LLDPE polymer fraction may also be referred to as "master batch"; the "main" LLDPE polymer component and the master batch may have the above mentioned density range of 0.918 g/cm³ to 0.920 g/cm³.
- optionally, the low density LLDPE polymer may be added, preferentially in an amount of 7 - 13 % by weight of the polymer mix.

Preferentially, the LLDPE polymer type of the main LLDPE component and of the "master batch" is identical and the only difference is that the master batch in addition comprises the additives. For example, the LDPE, the LLDPE master batch and the LLDPE component(s) lacking the additives may respectively be added to a container in the form of polymer granules. The granules are mixed and heated until all polymer granules have molten and a liquid polymer mixture is generated that is used for extruding the monofilament. Adding additives solely via a separate master batch that is based on the main type of polymer (here: the LLDPE polymer) may be advantageous as it is possible to modify some properties like color, flame retardants and others independently from the type and relative amount of the LLDPE and LDPE polymers respectively lacking the additives. Thus, it is possible to modify e.g. the color or the concentration of a flame retardant without deviating from an optimal ration of LLDPE and LDPE. Likewise, it is possible to slightly adapt the ratio of medium-density LLDPE and low density LLDPE without modifying the concentration of the additives in order to "fine tune" physic-chemical properties of the monofilament and fiber such as resilience, resistance to shear forces and splicing, flexibility, softness and tensile strength.

According to embodiments, the LLDPE polymer is a polymer created by a polymerization reaction under the presence of a Ziegler-Natta catalyst.

According to some embodiments, the Ziegler-Natta catalyst is a heterogeneous supported catalyst based on titanium compounds in combination with cocatalysts, e.g. organoaluminium compounds such as triethylaluminium. According to other embodiments, the Ziegler-Natta catalyst is a homogeneous catalyst. Homogeneous catalysts are usually based on complexes of Ti, Zr or Hf and are preferentially used in combination with a different organoaluminium cocatalyst, methylaluminoxane (MAO). Using a Ziegler-Natta catalyst may have the advantage that the branches of the generated LLDPE are distributed more randomly, e.g. show an atactic orientation. This may ease the entanglement with branches of LDPE molecules.

According to embodiments, the LLDPE polymer is a polymer created by a polymerization reaction under the presence of a metallocene catalyst. Using metallocene for catalyzing the polymerization for generating the LLDPE polymer may be advantageous as this particular form of catalysts ensures that the branching occurs in a less random and more defined manner. As a consequence of using metallocene as a catalyst, the number of branches per LLDPE molecule does not follow a normal distribution but rather follows a distribution having only one or very few (e.g. 1-3) peaks for the frequencies of branching per polymer molecule. Generating LLDPE polymers whose branch lengths are more randomly distributed may ease the entanglement with branches of LDPE molecules.

For example, a metallocene catalyst may be used together with a cocatalyst such as MAO, (AI(CH3)xOy)n. According to some examples, the metallocene catalyst has the composition Cp2MCl2 (M = Ti, Zr, Hf) such as titanocene dichloride. Typically, the organic ligands are derivatives of cyclopentadienyl. Depending of the type of their cyclopentadienyl ligands, for example by using an Ansa-bridge, metallocene catalysts can produce polymers of different tacticity and different branching frequencies . A tactic macromolecule in the IUPAC definition is a macromolecule in which essentially all the configurational (repeating) units are identical. The tacticity, branching frequency and distribution will have an effect on the physical properties of the polymer. The regularity of the macromolecular structure influences the degree to which it has rigid, crystalline long range order or flexible, amorphous long range disorder. According to embodiments, the tacticity of a polymer mixture that is used for manufacturing LLDPE or LDPE granules for use in artificial turf fiber production may be measured directly using proton or carbon-13 NMR. This technique enables quantification of the tacticity distribution by comparison of peak areas or integral ranges corresponding to known diads (r, m), triads (mm, rm+mr, rr) and/or higher order n-ads depending on spectral resolution. Other techniques that can be used for measuring tacticity include x-ray powder diffraction, secondary ion mass spectrometry (SIMS), vibrational spectroscopy (FTIR) and especially two-dimensional techniques.

According to embodiments, the LLDPE polymer is a polymer created by copolymerizing ethylene with 5 -12 % α-olefins having 3-8 carbon atoms, e.g. butene, hexene, or octane. The degree of crystallinity of the created LLDPE depends on the amount of added comonomers and is typically in the range of only 30-40%, the crystalline melting range is typically in the range 121-125°C.

According to embodiments, the LLDPE polymer is a polymer comprising 0.001-10 tertiary C-atoms per 100 C atoms of the polymer chain. Preferably, the LLDPE polymer comprises 0.8- 5 tertiary C atoms /100 carbon atoms of the polymer chain.

According to embodiments, the LDPE polymer is a polymer comprising more than 0.001, preferentially more than 1 tertiary C-atom/ 100 C atoms of the polymer chain.

The number of tertiary C-atoms is a measure of the degree of branching. Using an LLDPE and/or LDPE polymer having the above specified degree of branching may be advantageous as said degree of branching has been observed to cause a strong entanglement between LLDPE and LDPE polymer molecules which protects the polymer fiber against splicing. According to embodiments, manufacturing the artificial turf fiber comprises forming the stretched monofilament into a yarn. Multiple, for example 4 to 8 monofilaments, could be formed or finished into a yarn.

According to embodiments, the method further comprises weaving, spinning, twisting, rewinding, and/or bundling the stretched monofilament into the artificial turf fiber. This technique of manufacturing artificial turf is known e.g. from United States patent application US 20120125474 A1.

According to embodiments, the polymer mixture is a liquid polymer mixture and comprises two or more different, liquid phases. A first one of the phases comprises a first dye and the components of the polymer mixture according to any one of the embodiments described previously. For example, said first phase may comprise a mixture of the first and the second LLDPE polymer and the LDPE polymer. The second phase may comprise a second dye and an additional polymer, e.g. polyamide, that is immiscible with the first phase. The second dye may have a different color than the first dye, the additional polymer forming polymer beads within the first phase.

The stretching of the reheated monofilament deforms the polymer beads into threadlike regions. The extrusion of the two-phase- polymer mixture into a monofilament results in the extrusion and generation of a monofilament comprising a marbled pattern of a first color of the first dye and a second color of the second dye.

Thus, a liquid polymer mixture may be created wherein the two different dyes are separated in two different phases wherein one of the phases is "emulsified" in the other phase in the form of beads. This may be advantageous as it is not necessary to use or create customized extruders which mechanically prevent a premature intermixing of the two dyes, thereby ensuring that a monofilament with a marbled pattern rather than a monofilament with a color being the intermediate of the first and second color is created. Thus, embodiments of the invention allow using the same extrusion machinery for creating marbled monofilaments as for creating monochrome monofilaments. This may reduce production costs and may increase the diversity of artificial turf types that can be created with a single melting- and extrusion apparatus.

Moreover, complicated coextrusion, requiring several extrusion heads to feed one complex spinneret tool is not needed in order to provide for artificial turf that accurately reproduces the texture of natural grass.

In a further beneficial aspect, the polymer mixture completely or largely constituting - together with the first dye - the first phase may not delaminate from the other polymer constituting - together with the second dye - completely or largely the second phase, even in case two different types of polymers are used in the two phases, e.g. the various forms of PE in the first phase and Polyamide in the second phase. The thread-like regions are embedded within the polymer mixture of the first phase. It is therefore impossible for them to delaminate.

According to embodiments, a compatibilizer is added to the polymer mixture and interfaces the first and second phases, thereby further preventing the delamination of the polymers in the different phases.

A further advantage may possibly be that the thread-like regions are concentrated, due to fluid dynamics during the extrusion process, in a central region of the monofilament during the extrusion process, while there is still a significant portion of the thread-like regions also on the surface of a monofilament to produce the marble pattern appearance. Thus, the other polymer (that may be of a more rigid material than LLDPE and LDPE in the first phase) may be concentrated in the center of the monofilament and a larger amount of softer plastic on the exterior or outer region of the monofilament. This may further lead to an artificial turf fiber with more grass-like properties both in terms of rigidity, surface smoothness and surface coloration and texture.

In contrast to alternative approaches where a marble color pattern is printed or painted onto the surface of an extruded filament, embodiments of the method result in a monofilament that comprises the marble color pattern not only on its surface but also inside. In case a filament should be split, its surface abraded or otherwise damaged, the marble color pattern will not be removed as it is not confined to the surface of the monofilament

According to embodiments, the polymer mixture comprises 0.2 to 35 % by weight the additional polymer, and more preferentially comprises 2 to 10 % by weight the additional polymer. According to embodiments, the amount of the "pure" LLDPE having a density in a range of 0.918 g/cm³ to 0.920 g/cm³, is chosen such that the said LLDPE polymer, the LLDPE master batch, the optional low density LLDPE, the LDPE polymer, the other polymer and the optional additives and/or filler substances add up to 100%.

According to embodiments, the additional polymer is a polar polymer.

According to embodiments, the additional polymer is any one of the following: polyamide, polyethylene terephthalate (PET), and polybutylene terephthalate (PBT).

According to embodiments, the marble pattern of the monofilament reproduces color patterns of natural grass. For example, the first dye is of green color and the other dye is of yellow or light-green color. This may be advantageous as an artificial turf fiber is produced that faithfully reproduces the appearance of natural grass.

According to embodiments, the first dye is phthalocyanine green in a concentration of 0,001 - 0,3 % by weight, preferably 0,05 - 0,2 % by weight of the first phase. Preferentially, the first dye has a green or dark green color. According to embodiments, the second dye is an azo-nickel pigment complex in a concentration of 0.5-5, more preferentially of 1.5-2 percent by weight of the second phase. For example, the azo-nickel pigment "BAYPLAST^{®}Gelb 5GN" of LANXESS may be used as the second dye. Preferentially, the second dye has a yellow, light green or yellow-green color.

According to embodiments, the extrusion is performed at a pressure of 40-140 bars, more preferentially between 60-100 bars. The polymer mixture may be created by adding polymer granules to a solid polymer composition that is mixed and heated until all polymers are molten. For example, the polymer mixture may be heated to reach at the time of extrusion a temperature of 190-260°C, more preferentially 210-250°C.

According to embodiments, the stretching comprises stretching the reheated monofilament according to a stretch factor in the range of 1.1-8, more preferentially in the range of 3-7.

According to embodiments, the quenching is performed in a quenching solution having a temperature of 10-60°C, more preferentially between 25°C-45°C.

According to embodiments, in the marble pattern of the monofilament the occurrence of the two different colors changes preferentially every 50-1000µm, more preferentially every 100-700µm. According to embodiments the marble pattern of the monofilament reproduces color patterns of natural grass.

In a further aspect, the invention relates to an artificial turf comprising artificial turf fibers according to any one of the embodiments and examples described herein.

According to embodiment, the artificial turf comprises a carrier, e.g. a carrier fabric made of synthetic and/or natural fibers, whereby the artificial turf fibers are incorporated into the carrier. For example, the fibers can be tufted, knitted or woven into the carrier.

According to some embodiments, the artificial turf further comprises a backing, also referred to "secondary backing" which surrounds at least portions of the artificial turf fibers. For example, the secondary backing can be a polyurethane backing or a latex backing. According to embodiments, the backing comprises or consists of a material that has been applied in liquid form on at least one side of the carrier to contact and wet at least portions of the artificial turf fibers, and that has then solidified to form a solid secondary backing.

In a further aspect, the invention relates to a method of manufacturing an artificial turf fiber. The method comprises:
- providing a base polymer;
- mixing the base polymer with an olefine grafted with one or more siloxanes; extruding the base polymer into a monofilament to provide the artificial turf fiber or extruding the base polymer into a film and cutting the film into slit film strands to provide the artificial turf fiber. For example, the extruded monofilament or one of the slid film strands can be used directly or after postprocessing steps as the artificial turf fiber.

According to embodiments, the postprocessing steps comprise:
- quenching the monofilament;
- reheating the monofilament; and
- stretching the reheated monofilament form the monofilament into the artificial turf fiber.

According to some embodiments, the postprocessing steps comprise:
- reheating the slit film strands; and
- stretching the reheated slit film strands into the artificial turf fiber.

According to embodiments, the base polymer is a mixture of two or more immiscible polymers. A first one of the polymers forms beads surrounded by a second one of the polymers. The extrusion stretches the beads of the first polymer into thread-like regions comprised in the monofilament.

According to some embodiments, the base polymer is a mixture of two or more polymers which are co-extruded. For example, the co-extruded polymers can be basically identical but comprise a different composition of additives, e.g. pigments. For example, it may be beneficial to use a coextrusion nozzle formed and shaped such that the extruded monofilament has a core-cladding structure as depicted in figures 1B-1D. This allows selectively adding additives like pigments to the one of the coextruded polymers where they are particularly useful or required. For example, the core polymer and the cladding polymer may both be the same PE polymer type, but pigments may be selectively added to the cladding polymer, not to the core polymer as the pigments in the core would not be visible anyway. In other embodiments, the core polymer and the cladding polymer may be different. For example, the core polymer could comprise or consist of a polymer which is more rigid than the cladding polymer.

In a further aspect, the invention relates to method of manufacturing artificial turf, comprising:
- incorporating a plurality of artificial turf fibers according to any one of the embodiments and examples described herein into a liquid backing; and
- allowing the liquid backing to solidify into a film, the film surrounding and thereby mechanically fixing at least portions of the artificial turf fibers, the solid film acting as the artificial turf backing.

For example, the liquid backing can be a liquid polyurethane mass or a liquid latex mass.

The incorporation of the artificial turf fibers into the artificial turf backing may comprise incorporating a plurality of the artificial turf fibers in a carrier, wherein first parts of the fibers are exposed to a bottom side of the carrier and second parts of said fibers are exposed to a top side of the carrier; adding the fluid backing on the bottom side of the carrier such that at least the first portions become embedded in the fluid backing. When the fluid backing solidifies into the film, it will firmly fix the artificial turf fibers in the carrier at least at the first portions of the fibers.

In a further aspect, the invention relates to the use of a polyolefin grafted with one or more siloxanes as process aid to prevent extrusion nozzle clogging when a base polymer is extruded through the nozzle to form an artificial turf fiber or to form a film to be cut into strands for use as artificial turf fibers. In particular, the base polymer can be a mixture of two or more immiscible polymers whereby one polymer forms beads and is surrounded by the other polymer and whereby the beads are formed into thread-like regions when the base polymer is pressed through the extrusion nozzle. In addition, or alternatively, the extrusion is a coextrusion of two or more polymers via the same extrusion nozzle.

Using a polyolefin grafted with one or more siloxanes in the context of a polymer mixture with multiple immiscible polymers may be beneficial as it prevents phase segregation and the clogging of the extrusion nozzle by a large bubble formed by fused beads of one of the polymers. This may not only clog the extrusion nozzle but also lead to undesired structural inhomogeneities of the extruded monofilament or to a breakage of the monofilament during extrusion.

Likewise, using a polyolefin grafted with one or more siloxanes in the context of coextruding two or more polymers (polymers of different types like PE or PA or polymers of the same type but comprising a different composition of additives, e.g. pigments) may be beneficial as it prevents a distortion of the desired distribution of the co-extruded polymers. For example, it was observed that the polyolefin grafted with the siloxanes prevents the accumulation of polymers attached to the inner walls of the co-extrusion nozzle which gives the contact surface of the co-extruded polymer the desired cross sectional profile of the contact surface. For example, the desired polymer distribution profile may be a core-cladding structure, whereby this structure is generated by an inner, cylinder-shaped duct made of metal walls which causes the polymer mass within this duct ("core polymer") and the polymer mass outside this inner duct ("cladding polymer") to move in parallel in the same direction before they are extruded.

The use of immiscible polymers to form thread-like regions and/or to use co-extrusions for creating complex polymer distribution patterns are particularly useful in the context of artificial turf fibers, because these fibers have to meet a plurality of requirements regarding their look and feel in order to provide naturally looking, soft, elastic, but at the same time durable and resilient fibers. The complexity of these polymer patterns, in particular if combined with complex, filigree fiber profiles with undulations and/or concave edges may cause various problems during extrusion: the extrusion nozzle may become completely or partially clogged, the desired polymer distribution may become distorted because some polymer fractions or fused polymer beads may become attached to the inner walls of the extrusion nozzle. This may be prevented by adding a polyolefin grafted with one or more siloxanes to at least one or all of the polymers comprised in the base polymer to be extruded.

The term "base polymer" as used herein refers to a polymer or a polymer mixture which may in its simplest case consist of a single polymer which may optionally comprise one or more additives such as pigments or flame retardants. However, a "base polymer" may be a mixture of one or more polymers of different types, e.g. a mixture of polyethylene and polyamide, or a mixture of HDPE and LDPE, which may optionally comprise one or more additives. The polymer mixture may be a single-phase system (such as a HDPE and LDPE mixture) or a multi-phase system (such as a liquid PE polymer comprising and embedding beads of immiscible PA polymer).

The term "coextrusion" as used herein relates to the extrusion of multiple streams of polymer material simultaneously. This type of extrusion utilizes two or more molten polymer masses delivered as steady volumetric throughput to a single extrusion head (die) which will extrude the materials in the desired form. The distribution of the coextruded polymer masses in the extruded monofilament are controlled by the relative speeds and amounts of the polymer mass streams and the size and shape of the extrusion nozzle. Often, a single polymer cannot meet all the demands of an application. Compound extrusion allows a blended material to be extruded, allowing appropriate placement of materials with differing properties such as composition (additive content), strength, stiffness, and wear resistance.

The term "Low-density polyethylene" (LDPE) as used herein refers to a thermoplastic made from the monomer ethylene having a density in the range of 0.910-0.940 g/cm3. According to embodiments, the base polymer is or comprises LDPE whose density range is within the above specified sub-range.

The term "Linear low-density polyethylene" (LLDPE) as used herein refers to a substantially linear polymer (polyethylene), with significant numbers of short branches. LLDPE differs structurally from conventional LDPE because of the absence of long chain branching. The linearity of LLDPE results from the different manufacturing processes of LLDPE and LDPE. In general, LLDPE is produced at lower temperatures and pressures by copolymerization of ethylene and alpha-olefins.

### Brief description of the drawings

In the following embodiments of the invention are explained in greater detail, by way of example only, making reference to the drawings in which:
- Figs. 1A-D: show various artificial turf fibers and their cross-section profiles;
- Fig. 2: is a flowchart of a method of manufacturing an artificial turf fiber;
- Fig. 3: is an illustration of a polyolefin grafted with siloxanes;
- Fig. 4: is an illustration of a base polymer comprising polyolefin grafted with one or more siloxanes and other additives;
- Fig. 5: is an illustration of a polymer mixture comprising two polymers, a compatibilizer and a polyolefin grafted with one or more siloxanes;
- Fig. 6: is an illustration of the process of extruding a polymer monofilament through an extrusion nozzle;
- Fig. 7: is an illustration of an artificial turf and its manufacturing;
- Fig. 8: shows a section through an area within a cylindrical extrusion nozzle; and
- Fig. 9: shows a cross-section of a granular polymer mixture 900 comprising LLDPE and HDPE according to one example implementation;
- Fig. 10: shows a coextrusion nozzle; and
- Fig. 11: is a block diagram of a system for synthesizing maleic acid-grafted polyolefins.

### Detailed Description

Like numbered elements in these figures are either equivalent elements or perform the same function. Elements which have been discussed previously will not necessarily be discussed in later figures if the function is equivalent.

**Figures** 1A-D

show various artificial turf fibers and their cross-section profiles.

Artificial turf fibers according to embodiments of the invention can be very different in terms of their composition, and/or in terms of their internal structure, and/or in terms of their cross-sectional profile.

For example, an artificial turf fiber may be composed exclusively or mainly of a single polymer, for example polyethylene of the same type, or it may be composed of a homogeneous single-phase blend of different polymers (for example LLDP and HDPE), or it may be composed of a combination of several different polymers forming a single-phase system or multi-phase system.

For example, the artificial turf fiber 100 as shown in **Figure 1A** may have a circular or ellipsoid cross-sectional profile 102.

According to other examples, the artificial turf fiber 120 may comprise one or more protrusions as depicted, for example, in **figure 1B****.** The artificial turf fiber 120 comprises two protrusions 104. The protrusions may include an angle between 100 and 180 degrees. In the non-limiting example shown, the protrusions face in opposite direction. The fiber 120 comprises a round bulge at the center and the two protrusions 104 with rounded tips. The core 103 and the cladding 110 may be joined together by a contact layer 108 where the core polymer and the cladding polymer are mixed.

As can be seen in Fig. 1B, the core of the fiber comprises threadlike regions 106 which may comprise a first polymer, e.g. a polar polymer like polyamide. The threadlike regions are formed in the extrusion process from beads of the first polymer which are surrounded by a compatibilizer and are embedded in a second polymer, e.g. a non-polar polymer like polyethylene. The polymer in the core surrounded by the threadlike regions 106 and also the cladding polymer may be a non-polar polymers, e.g. polyethylene, herein also referred to as "second polymer". However, it is also possible that the core polymer and the cladding polymer are different, e.g. polyethylene in the cladding and polypropylene in the core.

Preferably, the thread polymer or "first polymer" in the thread-like regions 106 amounts to not more than 30% by weight of the core, such that the cohesion provided by the contact layer 108 remains equal or stronger than in conventional three-component artificial turf fibers with a compatibilizing layer interfacing core and cladding, even if thread polymer and cladding polymer are not miscible with each other. The contact layer 108 may extend radially up to 50 percent of the minimum thickness of the cladding 110 in all directions extending radially from the core 103.

**Figure 1C** shows a cross-section of an artificial turf fiber 130 having a core-cladding structure and two protrusions 104. In the depicted example, the two protrusions enclose an angle of about 135 degrees towards the undulated side 112 of the profile. Both protrusions have a radial extension of about three times the thickness of the bulge 114. The profile extends over an overall thickness t between the front central bulge 114 and the rear tip of the protrusions. The distance between the two tips is the overall width w of the fiber. Both protrusions have a profile with one straight side 116 and, opposite to the straight side 116, one undulated side 112 with four notches along a straight base line. Taking into account the axial extension of the fiber, this profile corresponds to protrusions with one flat face and one grooved face.

For the purpose of demonstration only, assuming an exemplary overall profile width w = 1.35 mm and overall thickness t = 0.45 mm, the profile of Fig. 1C would have a cross-sectional area of 0.216 mm². At an exemplary average density of 0.92 g/mm², this corresponds to a yarn weight of about 2000 dtex.

**Figure 1D** shows a cross-section of an artificial turf fiber 140 having a core-cladding structure and two protrusions 104. The fiber depicted in figure 1C is similar to the fiber similar to the one shown in Fig. 1A, the difference being that the straight sides 116 of the profile are replaced by concave sides 118, corresponding to protrusions with one concave face and one grooved face. The curvature has been designed such that the thickness of the protrusions (measured between the concave side 118 and the base line of the undulated side 112) is gradually declining towards their respective tip. For comparison with the non-limiting example above, with an overall width w = 1.35 mm and overall thickness t = 0.45 mm as above, the profile of Fig. 1D would have a cross-sectional area of 0.180 mm². At the assumed average density of 0.92 g/mm², this corresponds to a yarn weight of about 1650 dtex. A fiber with the concave profile of Fig. 1D would thus have a weight reduction of about 17% compared to a fiber with the straight profile of Fig. 1C. As the concave profile has a slightly larger perimeter than the straight profile, a fiber with the concave profile would also have an increased surface-to-mass ratio compared to a fiber with the straight profile.

A variety of other types and outlines of artificial turf fibers is possible. The structures shown here with a core-cladding structure can also be formed as a fiber comprising only a single homogeneous mass of a single polymer or of a homogeneous polymer blend. It is also possible that while a core-cladding structure is present, no bead-like regions are contained in the core of this structure.

However, based on some of the examples shown here, it is clear that some profiles and shapes of artificial turf fibers are very filigree and thus susceptible to shear forces at the openings of the extrusion head. If the velocities of the polymer mass in the core and in the periphery (e.g. in particular at the tips of the protrusions) are too different due to excessive viscosity or excessive adhesion of the polymer mass to the walls of the extrusion head, such filigree profiles can cause the extrusion nozzles to clog, the profile to become blurred or defective, or even the monofilaments to tear during extrusion. By adding the additive polyolefin grafted with one or more siloxanes to the polymer, these disadvantages can be avoided and even very filigree synthetic fiber profiles can be formed.

If a core-cladding structure is present, it is also possible for the polyolefin grafted with one or more siloxanes to be added only to the cladding polymer, not to the core polymer, since the risk of the polymer mass adhering to the walls of the die is particularly high there.

Hence, using the polyolefin grafted with one or more siloxanes may allow manufacturing artificial turf fibers with very filigree profile, thereby imitating natural grass in its visual appearance and physical properties more faithfully. The use of the polyolefin grafted with one or more siloxanes may allow to manufacture high quality artificial turf fibers which give a faithful reproduction of the properties (e.g. visual appearance, wetting behavior, flexibility, etc.) of natural grass.

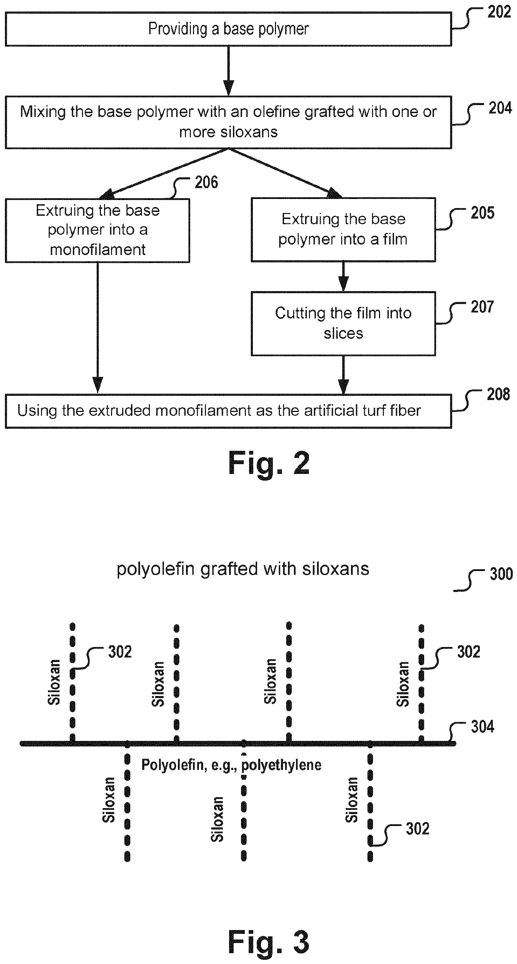

**Fig. 2** shows a flowchart which illustrates an example of a method of manufacturing an artificial turf fiber. First in step 202 a base polymer is provided. For example, the base polymer can comprise or consist of a molten polymer or polymer mixture. The base polymer may comprise one or more additives such as flame retardants, pigments, UV stabilizers, nucleating agents, dulling agents, anti-oxidants, or fillers.

Next in step 204, the polyolefin grafted with one or more siloxanes is mixed with the base polymer. For example, the mixing step 202 may be performed in the extruder by homogeneously mixing the polyolefin grafted with one or more siloxanes with the molten base polymer. The mixing may be performed with one or more stirrers. In some implementation variants, it is also possible to add the polyolefin grafted with one or more siloxanes to the base polymer before the base polymer enters the extrusion machine, e.g. when the base polymer still is in solid form. For example, the base polymer may have the form of polymer granules of a single type of polymer or of two or more different types of polymers. Optionally, the base polymer may comprise a polymer granulate fraction referred to as "master batch" which comprises pigments and/or further additives.

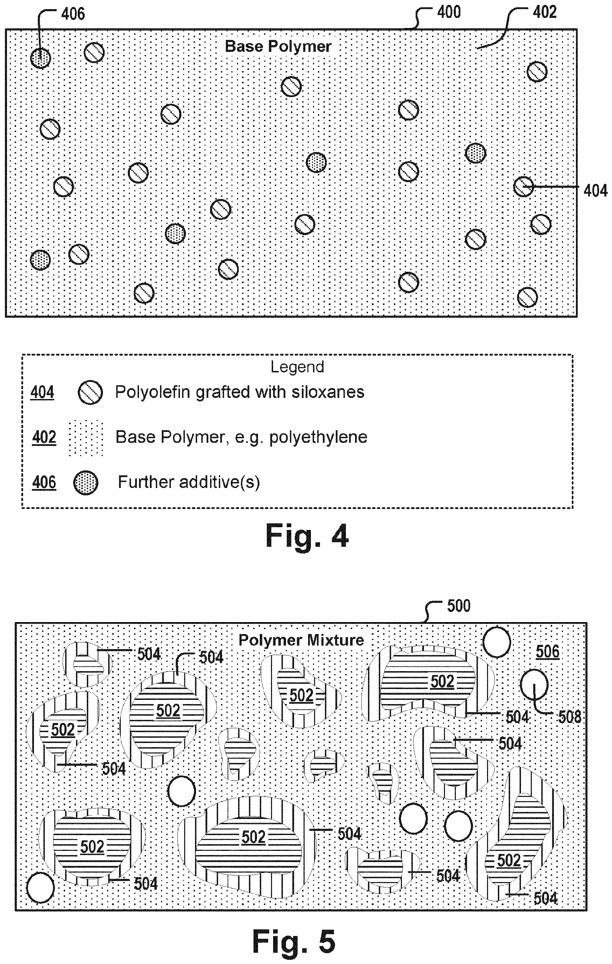

In some implementation variants, the base polymer is a polymer mixture having two or more different phases. For example, the base polymer may be a polymer mixture as illustrated in figure 5.

In the next step 206 the base polymer is extruded into a monofilament.

According to preferred embodiment, several post-processing steps are performed on the extruded monofilament. For example, the monofilament is quenched, i.e., rapidly cooled down, e.g. by immersing the monofilament in cool water. Then, the monofilament can be reheated and the reheated monofilament can be stretched to form the monofilament into the artificial turf fiber. In case the base polymer is a multi-phase polymer mixture wherein the first polymer forms beads within the second polymer, the stretching step deforms the polymer beads into thread-like regions which provides additional rigidity to the fibers. Next in step 208, the extruded monofilament is used as an artificial turf fiber. For example, the monofilament or a bundle of multiple monofilaments can be incorporated into a carrier to form an artificial turf. Additional steps may also be performed on the monofilament to form the artificial turf fiber. For instance the monofilament may be spun or woven into a yarn with desired properties and the yarn could be incorporated into the carrier instead of the monofilament. The incorporation can be performed, for example, by tufting or weaving the artificial turf fiber into the artificial turf backing. Then in a further, optional step the incorporated artificial turf fibers may be fixed at a desired position in the carrier by adding a secondary backing at least onto one side of the carrier. For example, the secondary backing can be polyurethane or latex. A comparatively low concentration of the polyolefin grafted with the one or more siloxanes may ensure that the surface roughness of the fibers is still high enough to allow the secondary backing to firmly fix the fibers.

**Figure** 3 is an illustration of a polyolefin grafted with one or more siloxanes 300. The grafting is a statistical process. Preferably, the polyolefin grafted with one or more siloxanes has multiple siloxanes 302 grafted to the polyolefin backbone 304.

**Figure 4** is an illustration of a base polymer 400 comprising a polyolefin grafted with one or more siloxanes 404 and other additives 406 which are dispersed in the base polymer. The polyolefin grafted with siloxanes 404 may have been distributed in and mixed with the base polymer by a stirrer or screw. The base polymer comprises at least one polymer 402 such as polyethylene. The other additives 406 may comprise a nucleating agent 302 such as phthalocyanine green, or phthalocyanine blue, and/or UV stabilizers.

**Figure 5** depicts a base polymer 500 which is a polymer mixture. The polymer mixture comprises a first polymer 502, e.g. a polar polymer such as polyamide, and a second polymer 506. The second polymer may be a non-polar polymer such as polyethylene. The polymer mixture may further comprise a compatibilizer 504. The first polymer and the second polymer are immiscible. In other examples there may be additional polymers such as a third, fourth, or even fifth polymer that are also immiscible with the second polymer.

There also may be additional compatibilizers which are used either in combination with the first polymer or the additional third, fourth, or fifth polymer. The first polymer forms polymer beads surrounded by the compatibilizer. The polymer beads may also be formed by additional polymers (e.g. the third, fourth,...., etc. polymer) which are not miscible in the second polymer and may be surrounded by the compatibilizer 504 or a different compatibilizer.

The polymer beads are surrounded by the compatibilizer and are within the second polymer or mixed into the second polymer.

The base polymer 500 may also comprise other things such as additives to color or provide flame or UV-resistance or improve the flowing properties of the polymer mixture. In particular, the base polymer 500 comprises polyolefin grafted with one or more siloxanes 508.

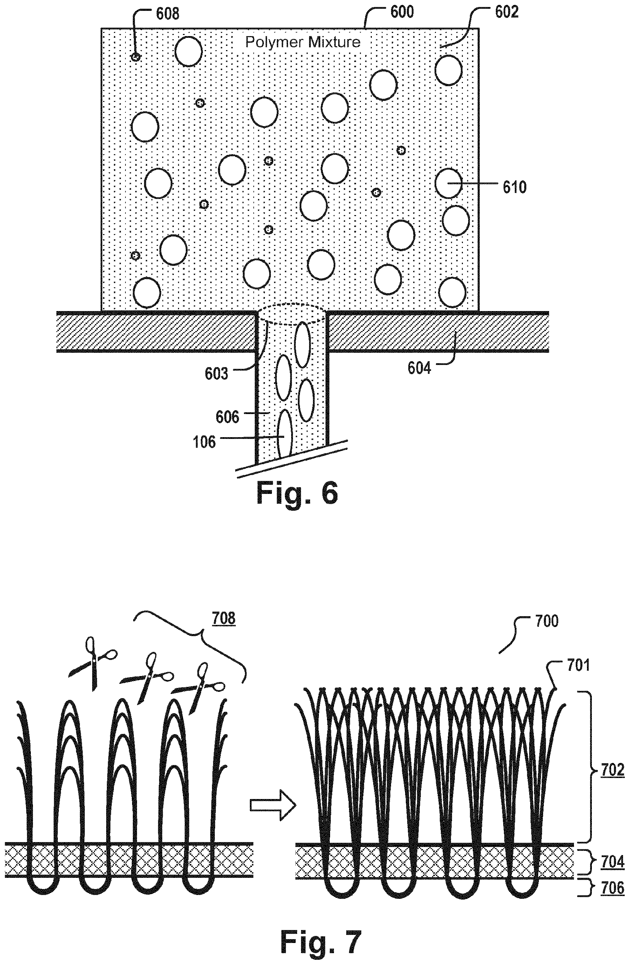

**Figure 6** is an illustration of the process of extruding a polymer a base polymer into a monofilament 606 which can be used as artificial turf fiber. Shown is an amount of a base polymer in the form of a polymer mixture 600. Within the polymer mixture 600 there is a large number of polymer beads 610. The polymer beads 610 may be made of one or more polymers that is not miscible with the second polymer 602 and is also separated from the second polymer 602 by a compatibilizer (not shown). A screw, piston or other device is used to force the polymer mixture 600 through a hole 603 in a plate 604. This causes the polymer mixture 600 to be extruded into a monofilament 606 and the polymer beads 610 to be stretched into thread-like regions 106. The second polymer 602 and the polymer beads 610 are extruded together. In some examples the second polymer 602 will be less viscous than the polymer beads 610 and the polymer beads 610 will tend to concentrate in the center of the monofilament 606. This may lead to desirable properties for the final artificial turf fiber as this may lead to a concentration of the thread-like regions 106 in the core region of the monofilament 606.

The polyolefin grafted with one or more siloxanes 608 is homogeneously dispersed in the base polymer 600 and may decrease the viscosity and adhesiveness of the base polymer. In examples where the base polymer comprises multiple immiscible polymers, the polyolefin grafted with one or more siloxanes may predominantly or solely be comprised in the one of the polymer having the highest share of the base polymer, e.g. the second polymer 602 into which the other, immiscible polymers are embedded as polymer beads 610. This may ensure that the polymer beads 610 do not fuse and separate into a polymer compartment at the extrusion nozzle which clogs the nozzle or generates shear forces which would tear the monofilament 606 apart. These shear forces could result from adhesion of the first polymer to the metal walls of the opening 603 in the plate 406 during the extrusion.

It should be noted that figure 6 does not represent the sizes of the polymer beads 610 and the polyolefin grafted with one or more siloxanes 608 to scale. According to examples, the additive is dispersed in the base polymer in a much more fine-grained manner, e.g. on the level of individual molecules or molecular aggregates, while the polymer bead in some examples will typically have a size of approximately 0.1 to 3 micrometer, preferably 1 to 2 micrometer in diameter. In other examples the polymer beads will be larger. They may for instance have a size with a diameter of a maximum of 50 micrometer.

In some embodiment the polymer beads comprise crystalline portions and amorphous portions. The polymer mixture is heated during the extrusion process and portions of the first polymer and also the second polymer may have a more amorphous structure or a more crystalline structure in various regions. Stretching the polymer beads into the thread-like regions may cause an increase in the size of the crystalline portions relative to the amorphous portions in the first polymer. This may lead for instance to the first polymer to become more rigid than when it has an amorphous structure. This may lead to an artificial turf with more rigidity and ability to spring back when pressed down. The stretching of the monofilament may also cause in some cases the second polymer or other additional polymers also to have a larger portion of their structure become more crystalline.

In a specific example of this the first polymer could be polyamide and the second polymer could be polyethylene. Stretching the polyamide will cause an increase in the crystalline regions making the polyamide stiffer. This is also true for other plastic polymers.

In another embodiment the step of providing a base polymer 600 comprises the step of creating of a polymer mixture used as the base polymer. The creation of the polymer mixture comprises forming a first mixture by mixing the first polymer with the compatibilizer. The creation of the polymer mixture further comprises the step of heating the first mixture. Then, a granulate is created by extruding the first mixture into monofilaments which are cut or otherwise granulated into a granulate. The creation of the polymer mixture further comprises the steps of mixing the granulated first mixture with the second polymer. The creation of the polymer mixture further comprises the step of heating the granulated first mixture with the second polymer to form the polymer mixture. Then, e.g. during or after the heating, the polyolefin grafted with one or more siloxanes is added to the polymer mixture and mixed with the polymer mixture. For example, the adding the polyolefin grafted with one or more siloxanes to the polymer mixture may be performed in the extruder. This particular method of creating the polymer mixture may be advantageous because it enables very precise control over how the first polymer and the compatibilizer are distributed within the second polymer and enables a homogeneous mixing of the polyolefin grafted with one or more siloxanes into the resulting polymer mixture before it is extruded. For instance the size or shape of the extruded first mixture may determine the size of the polymer beads in the polymer mixture.

In the aforementioned method of creating the polymer mixture for instance a so called one-screw extrusion method may be used. As an alternative to this the polymer mixture may also be created by putting all of the components that make it up together at once. For instance the first polymer, the second polymer and the compatibilizer and optionally also the polyolefin grafted with one or more siloxanes could be all added together at the same time. Other ingredients such as additional polymers or other additives could also be put together at the same time. However, it is also possible to add the polyolefin grafted with one or more siloxanes later, e.g. after having transferred the polymer mixture into the extruder. The amount of mixing of the polymer mixture could then be increased for instance by using a two-screw feed for the extrusion. In this case the desired distribution of the polymer beads can be achieved by using the proper rate or amount of mixing.

In some example implementations, the polymer mixture is at least a four-phase system. The polymer mixture comprises at least a third polymer. The third polymer is immiscible with the second polymer. The third polymer further forms the polymer beads surrounded by the compatibilizer within the second polymer. In some examples, the creating of the polymer mixture comprises the step of forming a first mixture by mixing the first polymer and the third polymer with the compatibilizer. The creating of the polymer mixture further comprises the step of heating the first mixture. The creating of the polymer mixture first comprises the step of extruding the first mixture. The creating of the polymer mixture further comprises the step of granulating the extruded first mixture. The creating of the polymer mixture further comprises mixing the first mixture with the second polymer. The creating of the polymer mixture further comprises the step of heating the first mixture with the second polymer to form the polymer mixture, and homogeneously mixing the polyolefin grafted with the siloxanes into the polymer mixture. This method may provide for a precise means of making the polymer mixture and controlling the size and distribution of the polymer beads using two different polymers. As an alternative the first polymer could be used to make a granulate with the compatibilizer separately from making the third polymer with the same or a different compatibilizer. The granulates could then be mixed with the second polymer to make the polymer mixture.

As an alternative to this the polymer mixture could be made by adding the first polymer, a second polymer, the third polymer and the compatibilizer and optionally also the polyolefin grafted with the siloxanes all together at the same time and then mixing them more vigorously. For instance a two-screw feed could be used for the extruder. According to some examples, the polyolefin grafted with the siloxanes are added later, e.g. are added to the polymer mixture having already been transferred into the extruder.

According to some examples, the third polymer is a polar polymer, e.g. polyamide. In some examples, the third polymer is polyethylene terephthalate, which is also commonly abbreviated as PET. In some examples, the third polymer is polybutylene terephthalate, which is also commonly abbreviated as PBT.

According to some examples, the polymer mixture comprises between 1% and 30% by weight the first polymer and the third polymer combined. In this example the balance of the weight may be made up by such components as the second polymer, the compatibilizer, and any other additional additives put into the polymer mixture.

According to some examples, the thread-like regions have a diameter of less than 20 micrometer. According to some examples, the thread-like regions have a diameter of less than 10 micrometer. According to some examples the thread-like regions have a diameter of between 1 and 3 micrometer.

According to some examples the artificial turf fiber extends a predetermined length beyond the artificial turf backing. The thread-like regions have a length less than one half of the predetermined length. According to some examples the thread-like regions have a length of less than 2 mm.

According to some examples the polymer mixture comprises between 1 and 20% by weight of the first polymer and the third polymer combined. Again, in this example the balance of the weight of the polymer mixture may be made up by the second polymer, the compatibilizer, and any other additional additives.

According to some examples the polymer mixture comprises between 5% and 10% by weight of the first polymer and the third polymer combined. Again in this example the balance of the weight of the polymer mixture may be made up by the second polymer, the compatibilizer, and any other additional additives.

According to some examples the polymer mixture comprises between 1% and 30% by weight the first polymer. In this example the balance of the weight may be made up for example by the second polymer, the compatibilizer, and any other additional additives.

According to some examples the polymer mixture comprises between 1% and 20% by weight of the first polymer. In this example the balance of the weight may be made up by the second polymer, the compatibilizer, and any other additional additives mixed into the polymer mixture.

According to some examples the polymer mixture comprises between 5% and 10% by weight of the first polymer. This example may have the balance of the weight made up by the second polymer, the compatibilizer, and any other additional additives mixed into the polymer mixture.

According to some examples the first polymer is polyamide or polyethylene terephthalate (PET) or polybutylene terephthalate (PBT).

According to some examples the second polymer is a non-polar polymer, e.g. polyethylene or polypropylene or a mixture of the aforementioned polymers.

According to some examples the polymer mixture comprises between 80-90% by weight of the second polymer. In this example the balance of the weight may be made up by the first polymer, possibly the second polymer if it is present in the polymer mixture, the compatibilizer, and any other chemicals or additives added to the polymer mixture.

According to some examples the polymer mixture further comprises any one of the following: a wax, a dulling agent, a ultraviolet stabilizer, a flame retardant, an anti-oxidant, a pigment, and combinations thereof. These listed additional components may be added to the polymer mixture to give the artificial turf fibers other desired properties such as being flame retardant, having a green color so that the artificial turf more closely resembles grass and greater stability in sunlight.

Artificial turf comprising fibers made of one or more monofilaments comprising the above-mentioned thread-like regions may have the advantage of being extremely durable because the thread-like regions are embedded within the second polymer via a compatibilizer. They therefore do not have the ability to delaminate. Having the second polymer surrounding the first polymer may provide for a stiff artificial turf that is soft and feels similar to real turf. The artificial turf comprising these thread-like regions is distinct from artificial turf which is coextruded. In coextrusion a core of typically 50 to 60 micrometer may be surrounded by an outer cover or sheathing material which has a diameter of approximately 200 to 300 micrometer in diameter. In this artificial turf there is a large number of thread-like regions of the first polymer. The thread-like regions may not continue along the entire length of the monofilament. The artificial turf may also have properties or features which are provided for by any of the aforementioned method steps. Nevertheless, a combination of coextrusion and thread-like regions is possible, as is depicted in figure 1B.

Adding a polyolefin grafted with one or more siloxanes may also be very helpful when the fiber is created by coextruding two or more different polymers, e.g. to achieve a core-shell-structure, because the polyolefin grafted with one or more siloxanes will prevent a distortion of the desired polymer pattern (e.g. core-shell pattern) caused by one of the coextruded polymer attaching too strongly to the walls of the extrusion nozzle.

**Figure 7** is an illustration of an artificial turf 700 and its manufacturing. After the base polymer has been extruded into a monofilament, the monofilament may be further processed to transform one or more monofilaments into an artificial turf fiber. The artificial turf fibers 701 are incorporated into a carrier 704, also referred to as "primary backing", e.g. a carrier fabric. In some examples the carrier 704 is a textile or a textile matt.

The incorporation of the artificial turf fiber into the artificial turf backing could for example be performed by tufting the artificial turf fiber into an artificial turf backing as depicted in the left part of figure 7. Thereby, loops are formed which are cut by one or more knifes 708. Thereby, artificial turf 700 comprising a plurality of synthetic fibers 701 incorporated in a carrier 704 is created. Optionally, a further, secondary backing, e.g. a latex-based or polyurethane-based backing may be applied on the back side of the artificial turf in order to firmly fix the tuft loops 706 and the fibers comprised therein on the lower side of the carrier to the carrier. The incorporated artificial turf fibers protrude by a defined height 702 from the upper side of the carrier.

According to some examples the integration of the artificial turf fibers in the carrier comprises weaving, bundling, or spinning multiple monofilaments together to create the artificial turf fiber. The incorporation of the artificial turf fiber into the artificial turf backing could for example be performed alternatively by weaving the artificial turf fiber into artificial turf backing (or fiber mat) during manufacture of the artificial turf carpet. This technique of manufacturing artificial turf is known from United States patent application US 20120125474 A1.

According to some examples the artificial turf fiber is not a single monofilament but a combination of a number of fibers. According to some examples the artificial turf fiber is a yarn. According to some examples the multiple stretched monofilaments are bundled together to create the artificial turf fiber. Multiple, for example 4 to 8 monofilaments, could be formed or finished into a yarn.

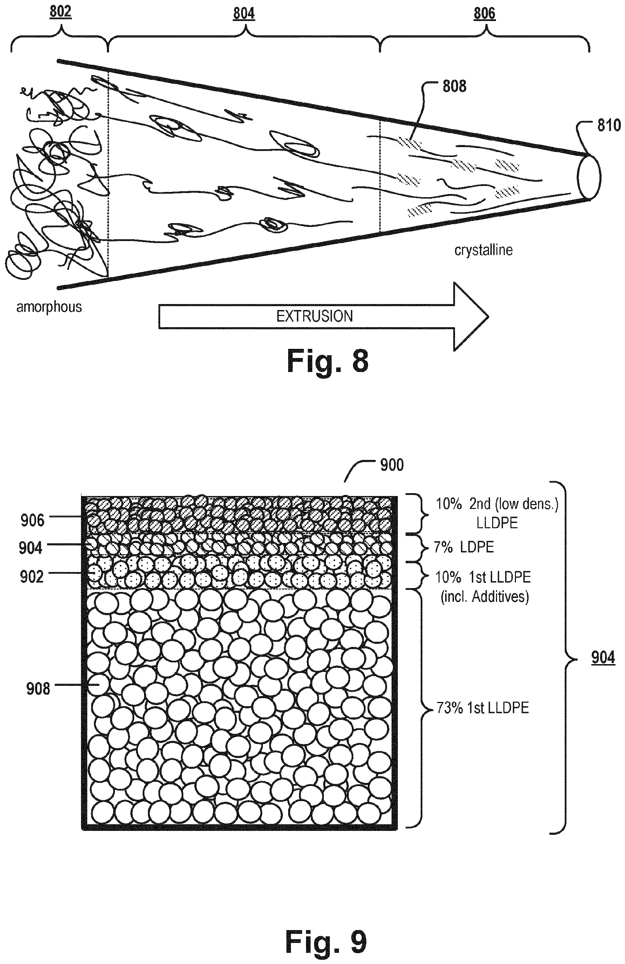

**Figure 8** shows a section through an area within a funnel-shaped extrusion nozzle. In a first area 802, the polymers of a liquefied polymer mixture are mostly in an amorphous state, i.e., there are only few or no crystalline regions and the polymer molecules do not show any preferred orientation in one dimension. In a second area 804 that corresponds to an area of increased shear forces, the polymer molecules are sheared and pulled at least partially in the direction of the opening 810 of the nozzle. In the area 806 corresponding to high shear forces, the LLDPE and partially also the LDPE molecules are at least partially disentangled, oriented and form crystalline portions 808. However, according to preferred embodiments, the majority of crystalline portions is created later in the stretching process.

Using an LLDPE-LDPE mixture in combination with a polyolefin grafted with one or more siloxanes according to embodiments of the invention may be beneficial as this additive helps to prevent the formation of crystalline portions in area 808, thereby preventing fiber breakage and also preventing delamination and splicing of the artificial turf fiber during use. By adding the appropriate amount of LDPE, in particular LDPE of a particular density, to the polymer mixture, the splicing can be prohibited even in fibers that are stretched during manufacturing. Without wishing to be bound by any theory, applicant believes that the LDPE ensures a sufficient degree of entanglement of the polymer side chains and the polyolefin grafted with one or more siloxanes supports this entanglement by preventing the formation of crystalline portions in areas 804 and 808 .

**Figure 9** shows a cross-section of a granular polymer mixture 900 comprising LLDPE and HDPE according to one example implementation. The polymer mixture comprises the following components e.g. in the form of polymer granules that are molten later:
- a "pure" first LLDPE polymer 908 of a density of 0.919 g/cm³ and at an amount of 73% by weight of the polymer mixture. The first LLDPE polymer preferentially lacks any additives;
- a "master batch" 902 comprising the first LLDPE polymer having a density of 0.919 g/cm³ and at an amount of 10% by weight of the polymer mixture. The master batch may comprise additives.
- An LDPE polymer 904 of a density of 0.920 g/cm³ and at an amount of 7% by weight of the polymer mixture.
- a second, low density LLDPE polymer 906 of a density of 0.916 g/cm³ and at an amount of 10% by weight of the polymer mixture.

Depending on the embodiments, the amount of the filler material, the master batch, the LDPE and the first and second LLDPE polymer may vary . Preferentially, the amount of the first LLDPE polymer 902 lacking the additives is in this case adapted such that all components of the polymer mixture add up to 100%.

In the depicted example, the LLDPE polymer in fraction 908 and in the master batch 902 and the additives contained in the master mix may constitute 83% by weight of the polymer mixture 900. In other embodiments (not shown), the polymer mixture 900 may comprise up to 39% filler material. In case the polymer mixture comprises 1% LDPE polymer and 99% LLDPE polymer (no filler or additives), an LDPE/LLDPE weight ratio of 1:99 is used. In case the polymer mixture comprises 15% LDPE polymer and 60% LLDPE polymer (a large amount of filler and additives may be used), an LDPE/LLDPE weight ratio of 15:60 is used. Preferentially, the LDPE/LLDPE weight ratio is between 5:95 and 8:60, i.e., between 5.3% and 13.3 %.

In the depicted example, 0.05 % by weight of the polymer mixture consists of the polyolefin grafted with the one or more siloxanes.

In some examples, the polymer components 902, 904, 906, 908 together form a first liquid phase (corresponding to the "second polymer") that may in addition comprise an additional polymer, also referred to as "first polymer" e.g. PA, that may form a separate phase that forms beads within the first phase. In this case, the amount of the first LLDPE is reduced in accordance with the amount of the additional polymer.

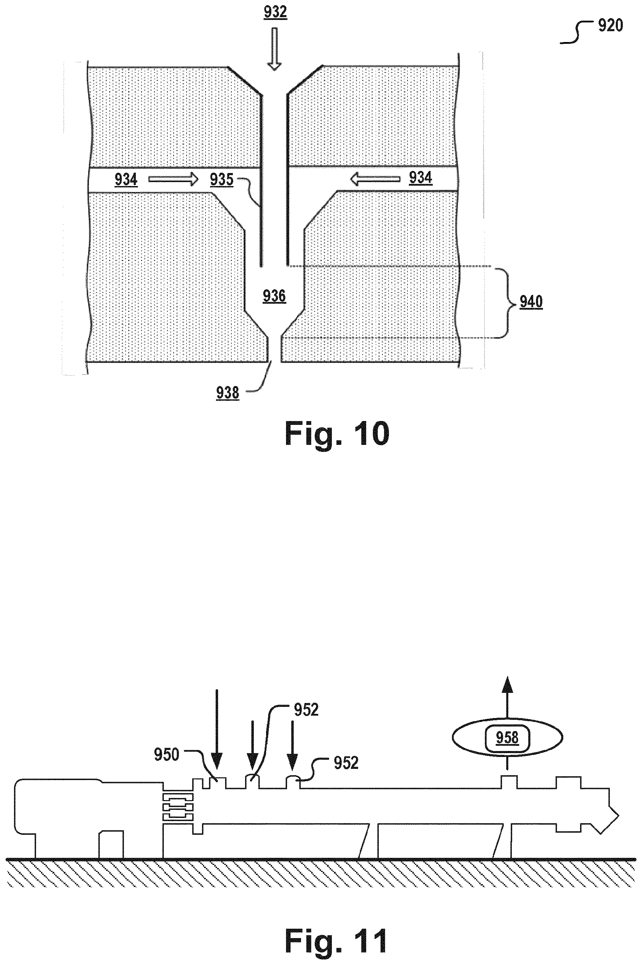

**Figure 10** shows a coextrusion nozzle 920 for creating artificial turf fibers having a core-cladding polymer distribution pattern.

The nozzle comprises a joining path 940 located upstream of a coextrusion opening 938. The setup comprises a cavity 936 which receives a free end of a capillary tube 935. Opposite to the inserted capillary tube 935, cavity 936 ends in coextrusion opening 938. A clearance between capillary tube 935 and the walls of hole 936 hydraulically connects the hole to a second channel system 934. Capillary tube 935 is hydraulically connected to a first channel system 932 and is not fully inserted into hole 936, such that a section 940 of hole 936 is hydraulically connected both to first channel system 932 and to second channel system 934. This cavity 936 defines the joining path 940 of the depicted coextrusion setup. Joining path 940 extends from capillary tube 935 to extrusion opening 938, as is indicated by dotted lines.

During coextrusion operation, capillary tube 935 receives a molten core polymer component from first channel system 932 and cavity 936 receives a molten cladding polymer component from second channel system 934. The respective transport directions of the polymer components are indicated by arrows. The two polymer components flow separated from each other until they come into contact in joining path 940. The two joined polymer components pass joining path 940, which narrows to the cross section of coextrusion opening 938, and exit coextrusion opening 938 as a bicomponent monofilament.

In cases where core and cladding are to be joined together with a contact layer comprising a mixture of the core polymer mixture and the cladding polymer component, the dimensions of the joining path are suitably chosen such that a stable contact layer of homogeneous thickness is formed. In an example, the contact layer is formed within an axial length of the joining path of 3 to 7 times the diameter of the liquid core polymer mixture at the upstream end of the joining path. In a more specific example, the diameter of the liquid core polymer mixture at the upstream end of the joining path is between 0.5 and 1.5 mm, the axial length of the joining path is between 1.5 and 10.5 mm, causing the melted core polymer mixture to mix with the cladding polymer component in a contact layer with a radial thickness between 10 and 150 µm.

**Figure 11** shows a block diagram of a system for synthesizing maleic acid-grafted polyolefins (PO-g-MA).

The PO-g-MA can then be used in further processing steps for synthesizing polyolefins grafted with one or more siloxanes (PO-g-Si).

Shown in s a twin screw extruder 956 comprising a die head 960. The extruder comprises a first opening 950 where a polyolefin (e.g. PP, EVA (Ethylen-Vinylacetat-Copolymer), and/or LLDPE), a reactive monomer such as maleic anhydride (MAH) and an initiator (peroxide) are fed into the extruder. Alternatively, the extruder may comprise one or more separate openings 952 for adding the MAH and the initiator separate from the polymer. The polyolefin is typically provided in the form of granulate or pellets. The reactive monomer may be provided e.g. as vinylic monomers such as maleic anhydride (MA). As an alternative to MA, glycidyl methacrylate (GMA) may also be used. A vacuum pump 958 is configured to transport the mixture of polymer, the reactive monomer and peroxide to the die head 960. The mixture of the polyolefin, the initiator and the reactive monomer are melt-extruded in order to generate a polyolefin grafted with MA (PO-g-MA). According to some examples, as a result of this synthesis step, 0.1 % to 0.5 % of the monomers of the polyolefin (e.g. ethylene monomers in case of a polyethylene) are functionalized with MA, thereby providing functionalized groups which allow to covalently link the siloxanes to the polyolefin backbone in a subsequent synthesis step. This process is also referred to as "reactive extrusion", as a free-radical initiator attaches functional groups to a polyolefin chain by attaching the reactive monomers to the polyolefin chain. For example, the PO-g-MA can be maleic anhydride-grafted polyolefins with weight fractions of acid anhydride based on the total molecule in the range of 0.01 - 10 %, in particular 0.15 - 10 %.

According to some examples, the PO-g-MA is MA-HDPE. According to other examples, the PO-g-MA is MA-LLDPE or MA-PP or MA-PA. In each of these examples, the content of Ma is preferably in the range of 0.5% to 2%, in particular about 1.0% by weight of the of the PO-g-MA molecule.

In a second synthesis step (not shown), the PO-g-MA is stirred in a batch reactor at 180°C with Hydroxy-functionalized siloxane to generate the polyolefins (PO) grafted with one or more siloxanes (PO-g-Si). For example, a PO-g-Si can be synthesized by reacting an anhydride group-containing polyolefin in a solvent with a hydroxy-functional, linear, organically modified siloxane. For example, the siloxanes can be polyester-modified siloxanes, for example α,ω-dihydroxypolyestersiloxanes. The reaction is commenced under vigorous stirring and elevated temperatures of 165-195° C. One or more organopolysiloxanes can thereby be attached to a polyolefin backbone via ester linkages. Condensation between hydroxyl and anhydride groups results in a permanent chemical bond of the siloxane chains to the polymer matrix. As an alternative to the solvent-based approach, PO-g-Si can also be prepared, for example, under the action of shear forces, for example during incorporation into the polymer on an extruder.

According to some implementation variants, the polyolefin grafted siloxanes are synthesized as specified in the European patent application EP1211277 B1 which is included herein per reference in its entirety.

### List of reference numerals

- 100: artificial turf fiber
- 102: circular or ellipsoid cross section fiber profile
- 103: core
- 104: protrusion
- 106: thread-like region
- 110: cladding
- 112: undulated side
- 114: core-cladding-contact surface
- 115: bulge
- 116: straight side
- 118: concave side
- 120: artificial turf fiber
- 130: artificial turf fiber, cross section
- 140: cross section of artificial turf fiber
- 202-208: steps
- 300: polyolefin grafted with siloxanes
- 302: siloxane
- 304: polyolefin
- 400: polymer mixture
- 402: base polymer
- 404: polyolefin grafted with one or more siloxanes
- 406: further additives
- 408: polymer bead
- 500: polymer mixture
- 502: first polymer
- 504: compatibilizer
- 506: second polymer
- 508: polyolefin grafted with one or more siloxanes
- 600: polymer mixture
- 602: second polymer
- 603: hole
- 604: plate
- 606: monofilament
- 608: polyolefin grafted with one or more siloxanes
- 610: first polymer (beads)
- 700: artificial turf
- 702: fiber height
- 704: carrier
- 706: tuft loops on lower side of carrier
- 708: knife cutting fiber loops on upper side of carrier
- 802: area with predominantly amorphous state
- 804: area of increased shear forces in polymer mixture
- 806: area of high shear forces
- 808: crystalline portions
- 810: opening of the nozzle
- 900: polymer mixture
- 902: master batch LLDPE fraction
- 904: LDPE polymer fraction
- 906: second LLDPE polymer fraction
- 908: (first/main) LLDPE fraction
- 920: coextrusion nozzle
- 932: first channel system
- 934: second channel system
- 935: capillary tube
- 936: cavity
- 938: coextrusion opening
- 940: joining path
- 950: first opening
- 952: second openings
- 956: twin screw extruder
- 958: vacuum pump
- 960: die head

## Claims

1. An artificial turf fiber (100, 120, 130, 140, 606, 701) comprising a polyolefin grafted with one or more siloxanes (300, 404, 508).

2. The artificial turf fiber of claim 1, wherein the artificial turf fiber is free from halogen compounds.

3. The artificial turf fiber of any one of the previous claims, wherein the artificial turf fiber is free from free siloxanes.

4. The artificial turf fiber of any one of the previous claims, wherein the polyolefin is polyethylene or polypropylene or polyamide.

5. The artificial turf fiber of any one of the previous claims, wherein at least 0.01 % by weight of the artificial turf fiber, and in particular 0.01 % to 0.25 % by weight of the artificial turf fiber, in particular 0.01 % to 0.09 % by weight of the artificial turf fiber, and in particular 0.02-0.03 % by weight of the artificial turf fiber, consists of the polyolefin grafted with the one or more siloxanes.

6. The artificial turf fiber of any one of the previous claims, wherein the molecular weight of the polyolefin grafted with one or more siloxanes is larger than 500 Dalton, wherein in particular at least 50% of the molecules of the polyolefin grafted with one or more siloxanes have a molecular weight of at least 2k Dalton.

7. The artificial turf fiber of any one of the previous claims, wherein the polyolefin grafted with the one or more siloxanes is a graft copolymer in which a plurality of siloxane side-chain-blocks are grafted onto a backbone consisting of the polyolefin.

8. The artificial turf fiber of any one of the previous claims, wherein in the polyolefin grafted with one or more siloxanes, the polyolefin:siloxane ratio is chosen such that the polyolefin grafted with one or more siloxanes are solid or have wax-consistency at room temperature.

9. The artificial turf fiber of any one of the previous claims, comprising two or more protrusions (104) which extend from the center of the fiber in different directions.

10. The artificial turf fiber of claim 9, the profile of at least one of the protrusions comprising a concave side (118) and/or an undulated section (112) spanning at least 60% of one side of said at least one protrusion.

11. The artificial turf fiber of any one of the previous claims, wherein the artificial turf fiber comprises a base polymer (400, 500, 600) and wherein the polyolefin grafted with the one or more siloxanes is dispersed in the base polymer.

12. The artificial turf fiber of claim 11, wherein the main part of the base polymer is selected from a group consisting of polyethylene, polypropylene, polyamide, polyethylene terephthalate (PET), and polybutylene terephthalate (PBT).

13. The artificial turf fiber of claim 11 or 12, wherein the base polymer comprises a first polymer (402, 610), a second polymer (404, 602), and a compatibilizer (406), wherein the first polymer and the second polymer are immiscible, wherein the first polymer forms threadlike regions (106) surrounded by the compatibilizer within the second polymer.

14. The artificial turf fiber of claim 13, wherein the first polymer is any one of the following: polyamide, polyethylene terephthalate (PET), and polybutylene terephthalate (PBT) and/or wherein the second polymer is any one of the following: polyethylene, polypropylene, and a mixture thereof.

15. The artificial turf fiber of claim 13 or 14, wherein the first polymer is a polar polymer and the second polymer is a non-polar polymer.

16. The artificial turf fiber of any one of claims 13 to 15, wherein the compatibilizer is any one of the following: a maleic acid grafted on polyethylene or polyamide; a maleic anhydride grafted on free radical initiated graft copolymer of polyethylene, SEBS, EVA, EPD, or polypropylene with an unsaturated acid or its anhydride such as maleic acid, glycidyl methacrylate, ricinoloxazoline maleinate; a graft copolymer of SEBS with glycidyl methacrylate, a graft copolymer of EVA with mercaptoacetic acid and maleic anhydride; a graft copolymer of EPDM with maleic anhydride; a graft copolymer of polypropylene with maleic anhydride; a polyolefin-graft-polyamide, polyethylene or polyamide; and a polyacrylic acid type compatibilizer.

17. An artificial turf fiber of any one of the previous claims, the fiber comprising:
- 60-99 % by weight of the fiber an LLDPE polymer (456, 452, 450,) ;
- 1-15% by weight of the fiber an LDPE polymer (454).

18. The artificial turf fiber of claim 17,
- the LLDPE polymer (450, 452) having a density in a range of 0.918 g/cm³ to 0.920 g/cm³; and
- the LDPE polymer (454) having a density in a range of 0.919 g/cm³ to 0.921 g/cm³.

19. An artificial turf (700) comprising artificial turf fibers according to any one of the previous claims.

20. A method of manufacturing an artificial turf fiber, the method comprising the steps of:
- providing (202) a base polymer;
- mixing (204) the base polymer with an olefine grafted with one or more siloxanes;
- extruding (206) the base polymer into a monofilament to provide the artificial turf fiber or extruding (205) the base polymer into a film and cutting (207) the film into slit film strands to provide the artificial turf fiber.

21. The method of claim 20, wherein the base polymer is a mixture of two or more immiscible polymers, wherein a first one of the polymers forms beads surrounded by a second one of the polymers, wherein the extrusion stretches the beads of the first polymer into thread-like regions comprised in the monofilament.

22. The method of claim 20 or 21, wherein the base polymer is a mixture of two or more polymers which are co-extruded.

23. A method of manufacturing artificial turf, comprising: .
- incorporating a plurality of artificial turf fibers according to any one of claims 1-18 into a liquid backing; and
- allowing the liquid backing to solidify into a film, the film surrounding and thereby mechanically fixing at least portions of the artificial turf fibers, the solid film acting as the artificial turf backing.

24. Use of a polyolefin grafted with one or more siloxanes as process aid to prevent extrusion nozzle clogging when a base polymer is extruded through the nozzle to form an artificial turf fiber or to form a film to be cut into strands for use as artificial turf fibers, wherein in particular the base polymer is a mixture of two or more immiscible polymers and/or wherein the extrusion is a coextrusion of two or more polymers via the same extrusion nozzle.

## Amended claims

### Amended claims in accordance with Rule 137(2) EPC.

1. An artificial turf fiber (100, 120, 130, 140, 606, 701) comprising a polyolefin grafted with one or more siloxanes (300, 404, 508), wherein at least 0.01 % by weight of the artificial turf fiber, and in particular 0.01 % to 0.25 % by weight of the artificial turf fiber, and in particular 0.01 % to 0.09 % by weight of the artificial turf fiber, consists of the polyolefin grafted with the one or more siloxanes.

2. The artificial turf fiber of claim 1, wherein the artificial turf fiber is free from halogen compounds.

3. The artificial turf fiber of any one of the previous claims, wherein the artificial turf fiber is free from free siloxanes.

4. The artificial turf fiber of any one of the previous claims, wherein the polyolefin is polyethylene or polypropylene.

5. The artificial turf fiber of any one of the previous claims, wherein 0.02-0.03 % by weight of the artificial turf fiber consists of the polyolefin grafted with the one or more siloxanes.

6. The artificial turf fiber of any one of the previous claims, wherein the molecular weight of the polyolefin grafted with one or more siloxanes is larger than 500 Dalton, wherein in particular at least 50% of the molecules of the polyolefin grafted with one or more siloxanes have a molecular weight of at least 2k Dalton.

7. The artificial turf fiber of any one of the previous claims, wherein the polyolefin grafted with the one or more siloxanes is a graft copolymer in which a plurality of siloxane side-chain-blocks are grafted onto a backbone consisting of the polyolefin.

8. The artificial turf fiber of any one of the previous claims, wherein in the polyolefin grafted with one or more siloxanes, the polyolefin:siloxane ratio is chosen such that the polyolefin grafted with one or more siloxanes are solid or have wax-consistency at room temperature.

9. The artificial turf fiber of any one of the previous claims, comprising two or more protrusions (104) which extend from the center of the fiber in different directions.

10. The artificial turf fiber of claim 9, the profile of at least one of the protrusions comprising a concave side (118) and/or an undulated section (112) spanning at least 60% of one side of said at least one protrusion.

11. The artificial turf fiber of any one of the previous claims, wherein the artificial turf fiber comprises a base polymer (400, 500, 600) and wherein the polyolefin grafted with the one or more siloxanes is dispersed in the base polymer.

12. The artificial turf fiber of claim 11, wherein the main part of the base polymer is selected from a group consisting of polyethylene, polypropylene, polyamide, polyethylene terephthalate (PET), and polybutylene terephthalate (PBT).

13. The artificial turf fiber of claim 11 or 12, wherein the base polymer comprises a first polymer (402, 610), a second polymer (404, 602), and a compatibilizer (406), wherein the first polymer and the second polymer are immiscible, wherein the first polymer forms threadlike regions (106) surrounded by the compatibilizer within the second polymer.

14. The artificial turf fiber of claim 13, wherein the first polymer is any one of the following: polyamide, polyethylene terephthalate (PET), and polybutylene terephthalate (PBT) and/or wherein the second polymer is any one of the following: polyethylene, polypropylene, and a mixture thereof.

15. The artificial turf fiber of claim 13 or 14, wherein the first polymer is a polar polymer and the second polymer is a non-polar polymer.

16. The artificial turf fiber of any one of claims 13 to 15, wherein the compatibilizer is any one of the following: a maleic acid grafted on polyethylene or polyamide; a maleic anhydride grafted on free radical initiated graft copolymer of polyethylene, SEBS, EVA, EPD, or polypropylene with an unsaturated acid or its anhydride such as maleic acid, glycidyl methacrylate, ricinoloxazoline maleinate; a graft copolymer of SEBS with glycidyl methacrylate, a graft copolymer of EVA with mercaptoacetic acid and maleic anhydride; a graft copolymer of EPDM with maleic anhydride; a graft copolymer of polypropylene with maleic anhydride; a polyolefin-graft-polyamide, polyethylene or polyamide; and a polyacrylic acid type compatibilizer.

17. An artificial turf fiber of any one of the previous claims 1-12, the fiber comprising:
- 60-99 % by weight of the fiber an LLDPE polymer (456, 452, 450,) ;
1-15% by weight of the fiber an LDPE polymer (454), or
- wherein the artificial turf fiber is the artificial turf fiber of any one of the previous claims 13-15, the second polymer comprises: 60-99 % by weight of the second polymer an LLDPE polymer (456, 452, 450,); and 1-15% by weight of the second polymer an LDPE polymer (454).

18. The artificial turf fiber of claim 17,
- the LLDPE polymer (450, 452) having a density in a range of 0.918 g/cm³ to 0.920 g/cm³; and
- the LDPE polymer (454) having a density in a range of 0.919 g/cm³ to 0.921 g/cm³.

19. An artificial turf (700) comprising artificial turf fibers according to any one of the previous claims.

20. A method of manufacturing an artificial turf fiber, the method comprising the steps of:
- providing (202) a base polymer;
- mixing (204) the base polymer with a polyolefin grafted with one or more siloxanes;
- extruding (206) the base polymer into a monofilament to provide the artificial turf fiber or extruding (205) the base polymer into a film and cutting (207) the film into slit film strands to provide the artificial turf fiber,
- wherein at least 0.01 % by weight of the artificial turf fiber, and in particular 0.01 % to 0.25 % by weight of the artificial turf fiber, and in particular 0.01 % to 0.09 % by weight of the artificial turf fiber, consists of the polyolefin grafted with the one or more siloxanes.

21. The method of claim 20, wherein the base polymer is a mixture of two or more immiscible polymers, wherein a first one of the polymers forms beads surrounded by a second one of the polymers, wherein the extrusion stretches the beads of the first polymer into thread-like regions comprised in the monofilament.

22. The method of claim 20 or 21, wherein the base polymer is a mixture of two or more polymers which are co-extruded.

23. A method of manufacturing artificial turf, comprising:
- incorporating a plurality of artificial turf fibers according to any one of claims 1- 18 into a liquid backing; and
- allowing the liquid backing to solidify into a film, the film surrounding and thereby mechanically fixing at least portions of the artificial turf fibers, the solid film acting as the artificial turf backing.

24. Use of a polyolefin grafted with one or more siloxanes as process aid to prevent extrusion nozzle clogging when a base polymer is extruded through the nozzle to form an artificial turf fiber or to form a film to be cut into strands for use as artificial turf fibers, wherein in particular the base polymer is a mixture of two or more immiscible polymers and/or wherein the extrusion is a coextrusion of two or more polymers via the same extrusion nozzle.
